# EUROPEAN PATENT SPECIFICATION

(11) **EP 1 829 680 B1**
(45) Date of publication and mention of the grant of the patent: **02.01.2019**
(21) Application number: 07002997.0
(22) Date of filing: 13.02.2007
(51) Int. Cl.: C09D 11/101, C09D 11/38

(54) **Ink composition, inkjet recording method, printed material, and process for producing lithographic printing plate**
Tintenzusammensetzung, Tintenstrahlaufzeichnungsverfahren, Drucksachen und Verfahren zur Herstellung einer Lithografiedruckplatte
Composition d'encre, procédé d'enregistrement de jet d'encre, matériau d'impression, et procédé de production de plaque d'impression lithographique

(30) Priority: 27.02.2006 JP 2006050747; 15.06.2006 JP 2006166516; 13.09.2006 JP 2006247493
(43) Date of publication of application: 05.09.2007
(73) Proprietor: FUJIFILM Corporation, Minato-ku Tokyo (JP)
(72) Inventor: Hayata, Yuuichi, Haibara-gun Shizuoka (JP)
(74) Representative: Hoffmann Eitle

(56) References cited:
- EP-A- 1 408 017
- EP-A1- 0 555 069
- EP-A1- 1 840 176
- WO-A-00/09332
- WO-A-99/29787
- WO-A-99/29788
- WO-A-2005/026270
- WO-A1-02/50186
- GB-A- 2 318 356
- US-A1- 2003 158 283

## Description

The present invention relates to an ink composition suitably used for inkjet recording, an inkjet recording method and, furthermore, a printed material obtained by employing the ink composition and a process for producing a lithographic printing plate.

More particularly, it relates to an ink composition suitable for inkjet recording that enables inkjet recording to be carried out stably for a long period of time, cures with high sensitivity upon exposure to actinic radiation, and gives a cured material having sufficient flexibility even after the ink has been cured and having good adhesion to a recording medium; an inkjet recording method; a printed material employing same; and a process for producing a lithographic printing plate employing the ink composition.

With regard to an image recording method for forming an image on a recording medium such as paper based on an image data signal, there are an electrophotographic system, sublimation type and melt type thermal transfer systems, an inkjet system, etc. In the electrophotographic system, a process of forming an electrostatic latent image on a photosensitive drum by electrically charging and exposing is required, and the system is complicated; as a result, there is the problem that the production cost is high. With regard to the thermal transfer system, although the equipment is inexpensive, due to the use of an ink ribbon there is the problem that the running cost is high and waste material is generated.

On the other hand, with regard to the inkjet system, the equipment is inexpensive and, since an image is formed directly on a recording medium by discharging an ink only on a required image area, the ink can be used efficiently and the running cost is low. Furthermore, there is little noise and it is excellent as an image recording system.

With regard to an ink composition that can be cured by irradiation with radiation such as ultraviolet rays and, in particular, an inkjet recording ink composition (radiation curing type inkjet recording ink), there is a desire for an ink composition that cures with high sensitivity and forms an image with high image quality. By achieving higher sensitivity, high curability upon exposure to actinic radiation can be imparted, and there are therefore provided various benefits such as a reduction in power consumption, longer lifetime of an actinic radiation generator due to a decrease in the load thereon and, as a result of adequate curing being achieved, suppression of evaporation of uncured low molecular weight material and of a reduction in the strength of an image formed. Furthermore, there is a desire for an ink composition that gives an image (printed material) that is resistant to cracking, peeling off, etc., and gives a cured film that has excellent impact resistance, flexibility, and adhesion to a substrate. A cured film having high flexibility, impact resistance, and adhesion to a substrate enables a printed material to be displayed or stored for a long period of time in various environments while maintaining high image quality, and also has advantages such as ease of handling of the printed material. Furthermore, improvement in the image strength due to higher sensitivity imparts high plate life to an image when the ink composition is used for the formation of an image of a lithographic printing plate.

As an ink composition that cures with high sensitivity and gives a cured film having excellent impact resistance, flexibility, and adhesion to a substrate, an ink composition comprising an N-vinyllactam has been disclosed (Japanese Registered Patent No. 2880845). However, the ink composition described in this patent publication is a highly viscous ink composition containing a polymer and an oligomer as main ink components, and it is difficult to discharge by ink jet.

Furthermore, as an ink composition that can be cured by irradiation with radiation such as ultraviolet rays, an ink composition having excellent adhesion has been disclosed (Published Japanese translation of PCT application No. 2004-514014). However, the curability, the flexibility of a cured film, and the adhesion to a substrate of the cured film are not all fully satisfied.

Conventionally, when a lithographic printing plate is produced, a so-called PS plate having a constitution in which a lipophilic photosensitive resin layer is provided on a hydrophilic support is used; this photosensitive resin layer is imagewise exposed to light to thus improve or degrade the solubility of the exposed area toward an alkaline developer and form an image, and the non-image area is then dissolved and removed. However, in recent years, a digitization technique of electronically processing, storing and outputting image information using a computer has become widespread, and a new image output method that matches the above technique has been desired. In particular, a method that can produce a printing plate without a treatment employing a developer has been examined, and a process for directly producing a lithographic printing plate using an inkjet recording ink composition has been investigated (ref. e.g. JP-A-54-117203; JP-A denotes a Japanese unexamined patent publication application). In this process, an ink is discharged imagewise on the surface of a preferably hydrophilic support by an inkjet method, etc., and this is then cured by irradiation with actinic radiation, thereby giving a printing plate having a desired image (preferably a hydrophobic image). In order to form an image area of a lithographic printing plate, it is desirable that ink droplets discharged onto a support cure quickly without spreading, the cured image area has excellent strength and adhesion to the support, and the image area follows flexure of the support well when the lithographic printing plate is set in a printer to thus prevent any occurrence of damage such as cracking, and there is currently a desire for an ink composition that is suitable for such an application.

It is an object of the present invention to provide an inkjet ink composition that has excellent curability toward irradiation with actinic radiation and for which an image obtained by curing the ink has excellent flexibility and adhesion to a substrate, and an inkjet recording method employing the ink composition.

It is another object of the present invention to provide a lithographic printing plate obtained by using an ink composition that has excellent curability toward irradiation with actinic radiation, and a process for producing a lithographic printing plate.

The above-mentioned objects have been accomplished by (1), (11), (13), and (14) below. (2) to (10) and (12), which are preferred embodiments, are also shown below.
(1) An ink composition comprising (A) an N-vinyllactam, (B) a radically polymerizable compound, is and (C) a polymerization initiator comprising (i) at least one of an acylphosphine compound and a 1-hydroxycyclohexyl phenyl ketone compound, and (ii) a benzophenone compound or a thioxanthone compound; wherein the content of the N-vinyllactam (A) is at least 10 wt % of the ink total weight, the content ratio by weight of (A):(B) is 1:8.5 to 1:1, and the viscosity of the composition is 5-40 mPa·s at 25°C.
(2) the ink composition according to (1), wherein the total amount of polymerization initiator (C) in the ink composition is at least 9 wt %,
(3) the ink composition according to (1) or (2), wherein the total amount of acylphosphine compound in the ink composition is at least 5 wt %,
(4) the ink composition according to (3), wherein the total amount of acylphosphine compound in the ink composition is at least 6 wt %,
(5) the ink composition according to any one of (1) to (4), wherein the total amount of N-vinyllactam (A) and radically polymerizable compound (B) in the ink composition is at least 65 wt %,
(6) the ink composition according to any one of (1) to (5), wherein it comprises (D) a colorant and (E) a dispersant,
(7) the ink composition according to any one of (1) to (6), wherein it comprises (F) a surfactant,
(8) the ink composition according to any one of (1) to (7), wherein the N-vinyllactam is N-vinylcaprolactam,
(9) the ink composition according to any one of (1) to (8), wherein the content ratio by weight of (A):(B) is 1:5 to 1:1,
(10) the ink composition according to any one of (1) to (9), wherein it is for inkjet recording,
(11) an inkjet recording method comprising (a¹) a step of discharging the ink composition according to any one of (1) to (10) onto a recording medium, and (b¹) a step of curing the ink composition by irradiating the discharged ink composition with actinic radiation,
(12) the inkjet recording method according to (11), wherein the actinic radiation is UV radiation having a peak light emission wavelength in the range of 350 to 420 nm and is emitted by a UV radiation-emitting light-emitting diode that gives a maximum illumination intensity on the surface of a recording medium of 10 to 2,000 mW/cm², and
(13) a printed material recorded by the inkjet recording method according to (11) or (12),
(14) a process for producing a lithographic printing plate, the process comprising: (a²) a step of discharging the ink composition according to any one of (1) to (10) onto a hydrophilic support, and (b²) a step of curing the ink composition by irradiating the discharged ink composition with actinic radiation so as to form a hydrophobic image on the hydrophilic support by curing the ink composition.

In accordance with the present invention, it is possible to provide an ink composition that cures with high sensitivity in a short period of time upon exposure to actinic radiation, can form a high quality image, and gives by curing the ink an image that has excellent adhesion to a recording medium, and an inkjet recording method employing the ink composition.

Furthermore, in accordance with the present invention, there can be provided a lithographic printing plate obtained by using an ink composition that can cure with high sensitivity in a short period of time upon exposure to actinic radiation, and a process for producing a lithographic printing plate.

### (1) Ink composition

The ink composition of the present invention (hereinafter, also called simply an 'ink') is an ink composition comprising (A) an N-vinyllactam, (B) a radically polymerizable compound, and (C) a polymerization initiator as defined in (1) above.

Furthermore, the ink composition of the present invention preferably comprises (D) a colorant, and (E) a dispersant, and also preferably comprises (F) a surfactant.

The present invention is explained in detail below.

The 'radiation' referred to in the present invention is not particularly limited as long as it is actinic radiation that can provide energy allowing an initiator species to be generated in an ink composition by the radiation, and broadly includes α rays, γ rays, X rays, ultraviolet rays, visible rays, and electron beams and, among these, ultraviolet rays and electron beams are preferable from the viewpoint of curing sensitivity and the availability of equipment, and ultraviolet rays are particularly preferable. With regard to the ink composition of the present invention, an ink composition that can be cured when exposed to ultraviolet rays as radiation is therefore preferable.

### (A)N-vinyllactam

The ink composition of the present invention comprises an N-vinyllactam. Preferred examples of the N-vinyllactam include compounds represented by Formula (I) below.

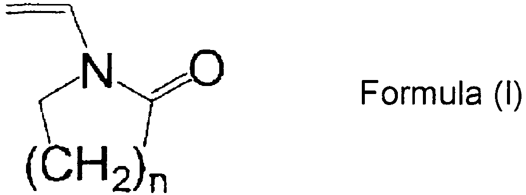

In Formula (I), n denotes an integer of 1 to 5; n is preferably an integer of 2 to 4 from the viewpoint of flexibility after the ink composition is cured, adhesion to a recording medium, and ease of availability of starting material, n is more preferably an integer of 2 or 4, and n is particularly preferably 4, which is N-vinylcaprolactam. N-vinylcaprolactam is preferable since it has excellent safety, is commonly used and easily available at a relatively low price, and gives particularly good ink curability and adhesion of a cured film to a recording medium.

The N-vinyllactam may have a substituent such as an alkyl group or an aryl group on the lactam ring, and may have a saturated or unsaturated ring structure bonded thereto.

The ink composition of the present invention comprises an N-vinyllactam at 10 wt % or greater of the entire ink. Due to an N-vinyllactam being contained at 10 wt % or greater of the entire ink, it is possible to provide an ink composition that has excellent curability and gives a cured film having excellent flexibility and adhesion to a substrate. The N-vinyllactam content in the ink composition is more preferably at least 10 wt % but no greater than 40 wt %. The N-vinyllactam is a compound having a relatively high melting point. It is preferable for the content to be no greater than 40 wt % since good solubility is exhibited at a low temperature of 0°C or less and the temperature range at which the ink composition can be handled becomes large. The content is more preferably at least 12 wt % but no greater than 40 wt %, and particularly preferably at least 15 wt % but no greater than 35 wt %.

The N-vinyllactam may be contained in the ink composition singly or in a combination of a plurality of types thereof.

In the present invention, when a plurality of types of N-vinyllactam are contained, the total amount of N-vinyllactam should satisfy the above-mentioned content.

### (B) Radically polymerizable compound

The ink composition of the present invention comprises another radically polymerizable compound in addition to the N-vinyllactam. The combined use of a radically polymerizable compound enables an ink composition having better curability to be provided.

The 'radically polymerizable compound' referred to in the present invention naturally means a radically polymerizable compound other than an N-vinyllactam.

As the radically polymerizable compound, a photocuring material is known that employs a photopolymerizable composition described in, for example, JP-A-7-159983, JP-B-7-31399, JP-A-8-224982, JP-A-10-863, Japanese patent application No. 7-231444, etc. (JP-B denotes a Japanese examined patent application publication).

The radically polymerizable compound is a compound having a radically polymerizable ethylenically unsaturated bond, and may be any compound as long as it has at least one radically polymerizable ethylenically unsaturated bond in the molecule; examples thereof include those having a chemical configuration such as a monomer, an oligomer, or a polymer. One type of radically polymerizable compound may be used, or two or more types thereof may be used in combination in order to improve an intended property.

Examples of the polymerizable compound having a radically polymerizable ethylenically unsaturated bond include unsaturated carboxylic acids such as acrylic acid, methacrylic acid, itaconic acid, crotonoic acid, isocrotonoic acid, and maleic acid, and esters and salts thereof, anhydrides having an ethylenically unsaturated group, acrylonitrile, styrene, and various types of radically polymerizable compounds such as unsaturated polyesters, unsaturated polyethers, unsaturated polyamides, and unsaturated urethanes.

Specific examples thereof include acrylic acid derivatives such as 2-ethylhexyl acrylate, 2-hydroxyethyl acrylate, butoxyethyl acrylate, carbitol acrylate, cyclohexyl acrylate, tetrahydrofurfuryl acrylate, benzyl acrylate, bis(4-acryloxypolyethoxyphenyl)propane, neopentylglycol diacrylate, 1,6-hexanediol diacrylate, ethylene glycol diacrylate, diethylene glycol diacrylate, triethylene glycol diacrylate, tetraethylene glycol diacrylate, polyethylene glycol diacrylate, polypropylene glycol diacrylate, pentaerythritol triacrylate, pentaerythritol tetraacrylate, dipentaerythritol tetraacrylate, trimethylolpropane triacrylate, tetramethylolmethane tetraacrylate, oligoester acrylate, N-methylol acrylamide, diacetone acrylamide, and epoxyacrylate; methacrylic derivatives such as methyl methacrylate, n-butyl methacrylate, 2-ethylhexyl methacrylate, lauryl methacrylate, allyl methacrylate, glycidyl methacrylate, benzyl methacrylate, dimethylaminomethyl methacrylate, 1,6-hexanediol dimethacrylate, ethylene glycol dimethacrylate, triethylene glycol dimethacrylate, polyethylene glycol dimethacrylate, polypropylene glycol dimethacrylate, trimethylolethane trimethacrylate, trimethylolpropane trimethacrylate, and 2,2-bis(4-methacryloxypolyethoxyphenyl)propane; and allyl compound derivatives such as allyl glycidyl ether, diallyl phthalate, and triallyl trimellitate. More specifically, commercial products, radically polymerizable or crosslinking monomers, oligomers, and polymers known in the art such as those described in 'Kakyozai Handobukku' (Crosslinking Agent Handbook), Ed. S. Yamashita (Taiseisha, 1981); 'UV·EB Koka Handobukku' (UV·EB Curing Handbook (Starting Materials) Ed. K. Kato (Kobunshi Kankoukai, 1985); 'UV·EB Koka Gijutsu no Oyo to Shijyo' (Application and Market of UV·EB Curing Technology', p. 79, Ed. Rad Tech (CMC, 1989); and E. Takiyama 'Poriesuteru Jushi Handobukku' (Polyester Resin Handbook), (The Nikkan Kogyo Shimbun Ltd., 1988) can be used.

### <Preferable radically polymerizable compound>

The radically polymerizable compound that can be used in the present invention preferably employs such as a (meth)acryl type monomer or prepolymer and a (meth)acryl ester of a epoxy type monomer or prepolymer and a urethane type monomer or prepolymer. A compound described below is further preferable.

2-Ethylhexyl-diglycol acrylate, 2-hydroxy-3-phenoxypropyl acrylate, 2-hydroxybutyl acrylate, neopentylglycol diacrylate hydroxypivalate, 2-acryloyloxyethylphthalic acid, methoxy-polyethyleneglycol acrylate, tetramethylolmethane triacrylate, 2-acryloyloxyethyl-2-hydroxyethylphthalic acid, dimethyloltricyclodecane diacrylate, ethoxylated phenylacrylate, 2-acryloyloxyethylsuccinic acid, nonylphenol ethylene oxide adduct acrylate, modified glycerol triacrylate, bisphenol A diglycigyl ether acrylic acid adduct, modified bisphenol A diacrylate, phenoxy-polyethylene glycol acrylate, 2-acryloyloxyethylhexahydrophthalic acid, bisphenol A propylene oxide modified diacrylate, bisphenol A ethylene oxide adduct diacrylate, dipentaerythritol hexaacrylate, pentaerythritol triacrylate tolylenediisocyanate urethane prepolymer, lactone modified flexible acrylate, butoxyethyl acrylate, propylene glycol digrycigyl ether acrylic acid adduct, pentaerythritol triacrylate hexametylenediisocyanate urethane prepolymer, 2-hydroxyethyl acrylate, methoxydipropylene grycol acrylate, ditrimetylolpropane tetraacrylate, pentaerythritol triacrylate hexametylenediisocyanate urethane prepolymer, stearyl acrylate, isoamyl acrylate, isomyristyl acrylate, isostearyl acrylate, etc.

These acrylate compounds can be reduced viscosity, can be obtained stable ink dischargability, and have high polymerizable sensitivity and good adhesion to a recording medium than a polymerizable compound having been used for conventional UV curing type ink, and that is preferable.

In the present invention, the above-mentioned monomer as a polymerizable compound has high reactivity, low viscosity, and good adhesion to a recording medium, and that is preferable.

The content ratio by weight of the N-vinyllactam (A) to the radically polymerizable compound (B) in the ink composition is 1:8.5 to 1:1, preferably 1:7 to 1:1, and particularly preferably 1:5 to 1:1. By combining them in the above-mentioned range, good curability, flexibility of a cured film, and adhesion of the cured film to a substrate can be obtained.

In the present invention, the proportion of the total amount of N-vinyllactam (A) and radically polymerizable compound (B) in the ink composition is preferably at least 65 wt %, and more preferably at least 70 wt %, and it is preferably no greater than 95 wt %, and more preferably no greater than 90 wt %.

It is preferable for the total amount of N-vinyllactam (A) and radically polymerizable compound (B) to be in the above-mentioned range since an ink composition with low viscosity, excellent dischargeability, and excellent curability can be provided.

In the present invention, the radically polymerizable compound may be used in combination with an oligomer or a polymer. The oligomer referred to here means a compound having a molecular weight (a weight-average molecular weight for one having a molecular weight distribution) of 2,000 or greater, and the polymer referred to here means a compound having a molecular weight (a weight-average molecular weight for one having a molecular weight distribution) of 10,000 or greater. The oligomer and the polymer optionally have a radically polymerizable group. It is preferable for the oligomer and the polymer to have no more than 4 radically polymerizable groups per molecule (an average of no more than 4 over all the molecules contained for one having a molecular weight distribution) since an ink composition having excellent flexibility can be obtained. They can suitably be used from the viewpoint of adjusting the viscosity to a level most suitable for jetting the ink.

### (C) Polymerization initiator

The polymerization initiator that can be used in the ink composition of the present invention is a compound that forms a polymerization initiating species by absorbing external energy. The external energy used for initiating polymerization can be broadly divided into heat and actinic radiation, and a thermal polymerization initiator and a photopolymerization initiator are used respectively. Examples of the actinic radiation include γ rays, β rays, an electron beam, ultraviolet rays, visible light, and infrared rays. In the present invention, the external energy used for initiating polymerization is preferably actinic radiation, more preferably the electron beam or ultraviolet rays, and yet more preferably ultraviolet rays.

### Radical polymerization initiator

Preferred examples of the benzophenone compound and the thioxanthone compound are described in 'RADIATION CURING IN POLYMER SCIENCE AND TECHNOLOGY' J. P. FOUASSIER and J. F. RABEK (1993), pp. 77 to 117. Preferred examples of the benzophenone compound, thioxanthone compound and the acylphosphine compound include an α-thiobenzophenone compound described in JP-B-47-6416, an aroylphosphonic acid ester described in JP-A-57-30704, a dialkoxybenzophenone described in JP-B-60-26483, α-aminobenzophenones described in JP-B-1-34242, US Pat. No. 4,318,791, and EP No. 0284561A1, an acylphosphine sulfide described in JP-B-2-9597, an acylphosphine described in JP-B-2-9596 and a thioxanthone described in JP-B-63-61950.

Examples of the benzophenone compound include benzophenone, 4-phenylbenzophenone, isophthalophenone, and 4-benzoyl-4'-methylphenylsulfide. As the benzophenone compound, it is also preferable to use a diaminobenzophenone compound. Examples of the diaminobenzophenone compound include p,p'-tetramethyldiaminobenzophenone.

Examples of the thioxanthone compound include 2,4-diethylthioxanthone, 2-isopropylthioxanthone, and 2-chlorothioxanthone.

The 1-hydroxycyclohexyl phenyl ketone compound referred to in the present invention means 1-hydroxycyclohexyl phenyl ketone and a compound obtained by substituting 1-hydroxycyclohexyl phenyl ketone with any substituent. The substituent may be selected freely from a range that enables an ability as a radical polymerization initiator to be exhibited, and specific examples thereof include an alkyl group (e.g. a methyl group, an ethyl group, a propyl group, a butyl group, etc.).

In the present invention, the acylphosphine compound is preferably an acylphosphine oxide compound.

Examples of the acylphosphine oxide compound include a compound having a structure represented by Formula (7) or (8).

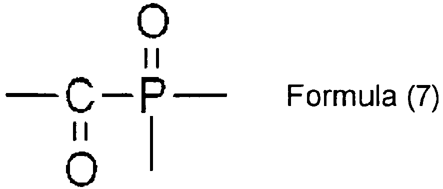

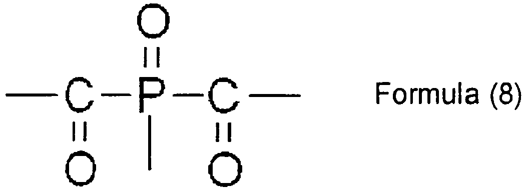

The acylphosphine oxide compound is particularly preferably one having a chemical structure represented by Formula (9) or (10). 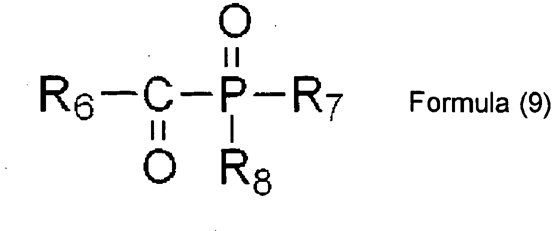 (In the formula, R₆, R₇, and R₈ denote an aromatic hydrocarbon group, which may have a methyl group or an ethyl group as a substituent.) 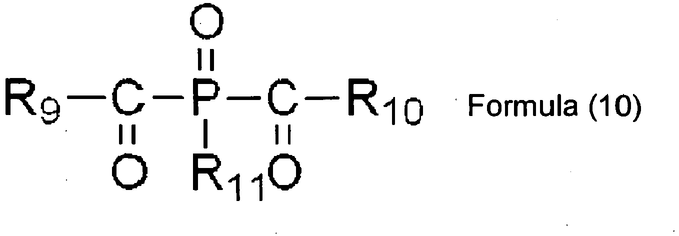 (In the formula, R₉, R₁₀, and R₁₁ denote an aromatic hydrocarbon group, which may have a methyl group or an ethyl group as a substituent.)

As the acylphosphine oxide compound, a monoacylphosphine oxide compound, a bisacylphosphine oxide compound, etc. may be used, and as the monoacylphosphine oxide compound, a known monoacylphosphine oxide compound may be used. Examples thereof include monoacylphosphine oxide compounds described in JP-B-60-8047 and JP-B-63-40799. Specific examples thereof include methyl isobutyrylmethylphosphinate, methyl isobutyrylphenylphosphinate, methyl pivaloylphenylphosphinate, methyl 2-ethylhexanoylphenylphosphinate, isopropyl pivaloylphenylphosphinate, methyl p-tolylphenylphosphinate, methyl o-tolylphenylphosphinate, methyl 2,4-dimethylbenzoylphenylphosphinate, isopropyl p-t-butylbenzoylphenylphosphinate, methyl acryloylphenylphosphinate, isobutyryldiphenylphosphine oxide, 2-ethylhexanoyldiphenylphosphine oxide, o-tolyldiphenylphosphine oxide, p-t-butylbenzoyldiphenylphosphine oxide, 3-pyridylcarbonyldiphenylphosphine oxide, acryloyldiphenylphosphine oxide, benzoyldiphenylphosphine oxide, vinyl pivaloylphenylphosphinate, adipoyl-bis-diphenylphosphine oxide, pivaloyldiphenylphosphine oxide, p-tolyldiphenylphosphine oxide, 4-(t-butyl)benzoyldiphenylphosphine oxide, terephthaloyl-bis-diphenylphosphine oxide, 2-methylbenzoyldiphenylphosphine oxide, versatoyldiphenylphosphine oxide, 2-methyl-2-ethylhexanoyldiphenylphosphine oxide, 1-methylcyclohexanoyldiphenylphosphine oxide, methyl pivaloylphenylphosphinate, and isopropyl pivaloylphenylphosphinate.

As the bisacylphosphine oxide compound, a known bisacylphosphine oxide compound may be used. Examples thereof include bisacylphosphine oxide compounds described in JP-A-3-101686, JP-A-5-345790, and JP-A-6-298818. Specific examples thereof include bis(2,6-dichlorobenzoyl)phenylphosphine oxide, bis(2,6-dichlorobenzoyl)-2,5-dimethylphenylphosphine oxide, bis(2,6-dichlorobenzoyl)-4-ethoxyphenylphosphine oxide, bis(2,6-dichlorobenzoyl)-4-propylphenylphosphine oxide, bis(2,6-dichlorobenzoyl)-2-naphthylphosphine oxide, bis(2,6-dichlorobenzoyl)-1-naphthylphosphine oxide, bis(2,6-dichlorobenzoyl)-4-chlorophenylphosphine oxide, bis(2,6-dichlorobenzoyl)-2,4-dimethoxyphenylphosphine oxide, bis(2,6-dichlorobenzoyl)decylphosphine oxide, bis(2,6-dichlorobenzoyl)-4-octylphenylphosphine oxide, bis(2,4,6-trimethylbenzoyl)phenylphosphine oxide, bis(2,4,6-trimethylbenzoyl)-2,5-dimethylphenylphosphine oxide, bis(2,6-dichloro-3,4,5-trimethoxybenzoyl)-2,5-dimethylphenylphosphine oxide, bis(2,6-dichloro-3,4,5-trimethoxybenzoyl)-4-ethoxyphenylphosphine oxide, bis(2-methyl-1-naphthoyl)-2,5-dimethylphenylphosphine oxide, bis(2-methyl-1-naphthoyl)-4-ethoxyphenylphosphine oxide, bis(2-methyl-1-naphthoyl)-2-naphthylphosphine oxide, bis(2-methyl-1-naphthoyl)-4-propylphenylphosphine oxide, bis(2-methyl-1-naphthoyl)-2,5-dimethylphenylphosphine oxide, bis(2-methoxy-1-naphthoyl)-4-ethoxyphenylphosphine oxide, bis(2-chloro-1-naphthoyl)-2,5-dimethylphenylphosphine oxide, and bis(2,6-dimethoxybenzoyl)-2,4,4-trimethylpentylphosphine oxide.

Among them, preferred examples of the acylphosphine oxide compound in the present invention include bis(2,4,6-trimethylbenzoyl)phenylphosphine oxide (Irgacure 819: manufactured by Ciba Specialty Chemicals), bis(2,6-dimethoxybenzoyl)-2,4,4-trimethylpentylphenylphosphine oxide, and 2,4,6-trimethylbenzoyldiphenylphosphine oxide (Darocur TPO: manufactured by Ciba Specialty Chemicals, Lucirin TPO: manufactured by BASF).

The use an acylphosphine compound or a 1-hydroxycyclohexyl phenyl ketone compound as the polymerization initiator provides good curability.

The combined use of an acylphosphine compound and/or 1-hydroxycyclohexyl phenyl ketone together with a benzophenone compound or a thioxanthone compound as the polymerization initiator enables better curability to be obtained, which is preferable.

In the present invention, the acylphosphine compound, which is a polymerization initiator, is preferably contained at at least 5 wt % of the total ink weight, and more preferably at at least 6 wt %. Furthermore, the content of the acylphosphine compound is preferably no greater than 18 wt % of the ink total weight, and more preferably no greater than 15 wt %.

In the present invention, when two or more types of acylphosphine compound are contained, the total amount of acylphosphine compound is preferably in the above-mentioned range.

It is preferable for the content of the acylphosphine compound to be in the above-mentioned range since good curability can be obtained.

### Cationic polymerization initiator

In the ink composition of the present invention, as described later, when a cationically polymerizable compound is used in combination, it is preferable to use a cationic polymerization initiator in combination.

Firstly, B(C₆F₅)₄⁻, PF₆⁻, AsF₆⁻, SbF₆⁻, and CF₃SO₃⁻ salts of diazonium, ammonium, iodonium, sulfonium, phosphonium, etc. aromatic onium compounds can be cited. Secondly, sulfonated materials that generate a sulfonic acid can be cited. Thirdly, halides that photogenerate a hydrogen halide can also be used. Fourthly, iron arene complexes can be cited.

Examples [(b-1) to (b-96)] of cationic polymerization initiators that are suitably used in the present invention are listed below, but the present invention should not be construed as being limited thereby.

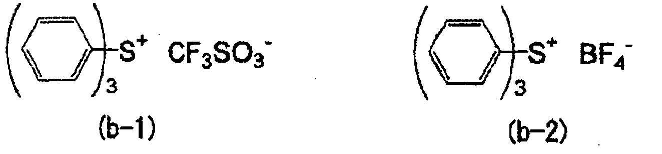

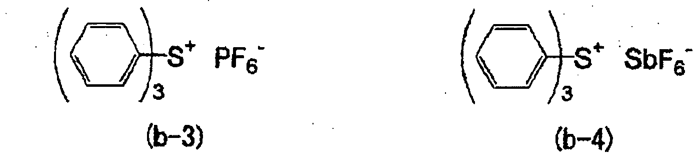

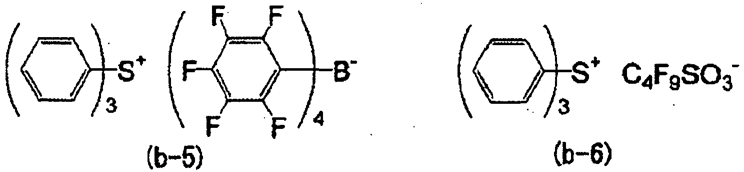

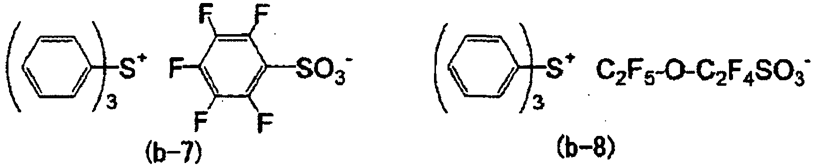

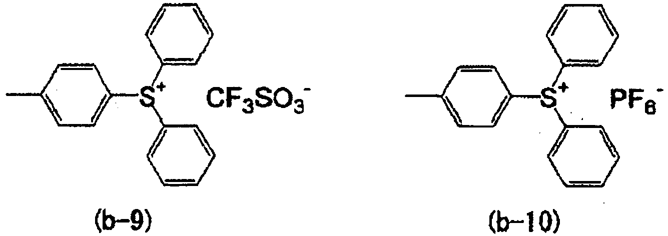

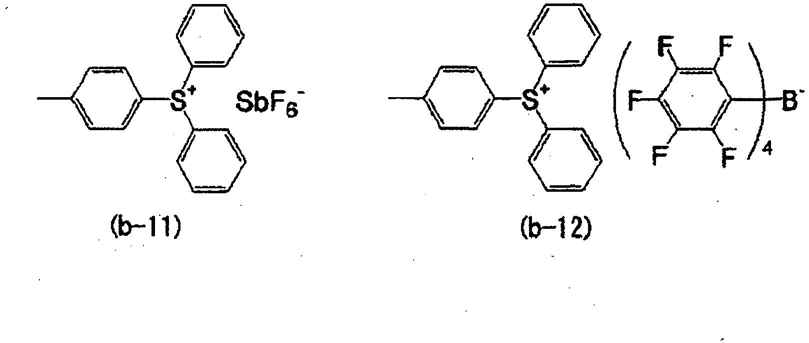

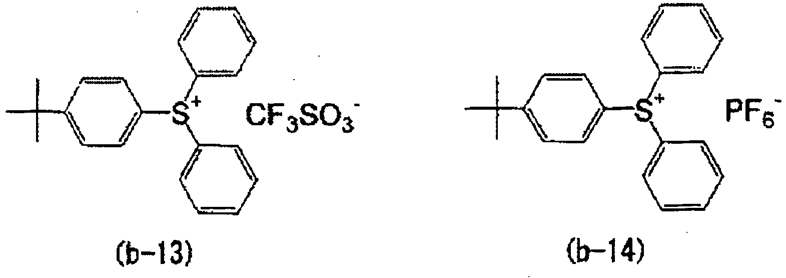

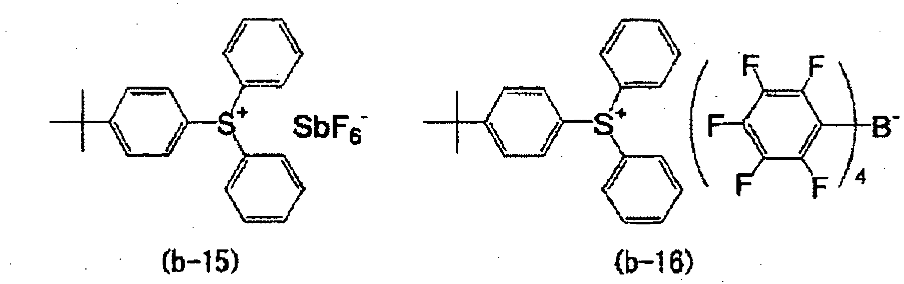

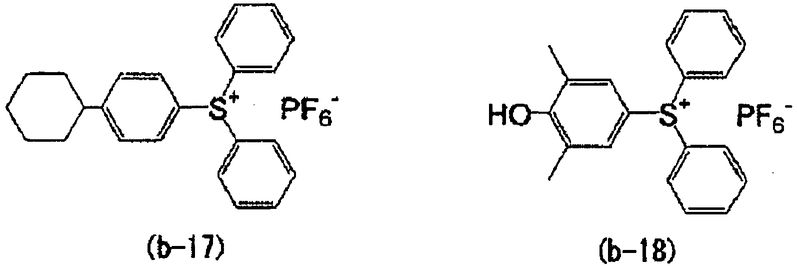

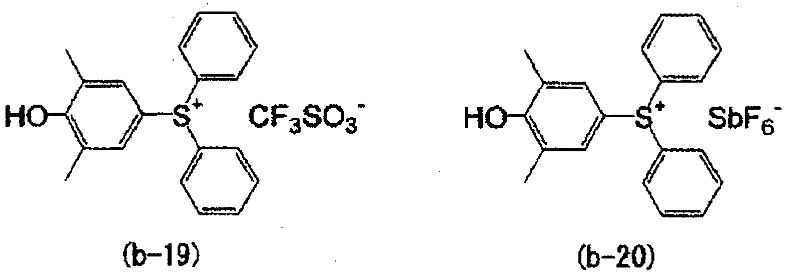

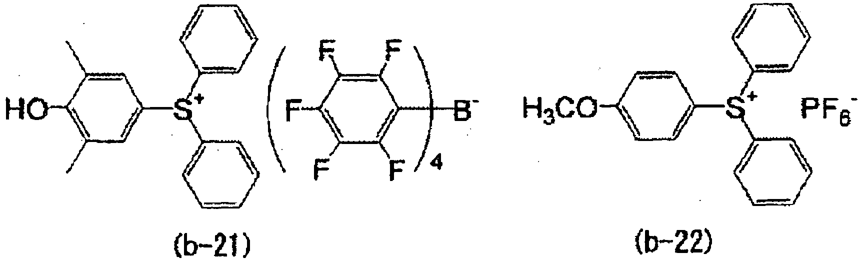

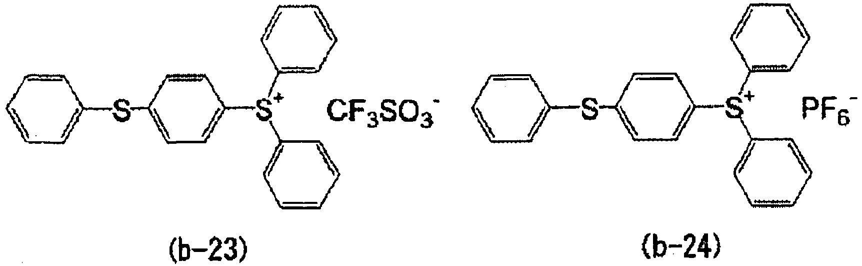

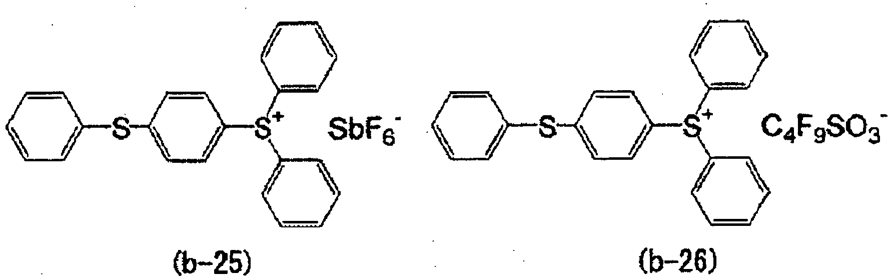

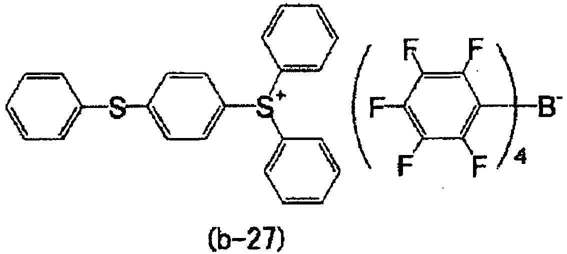

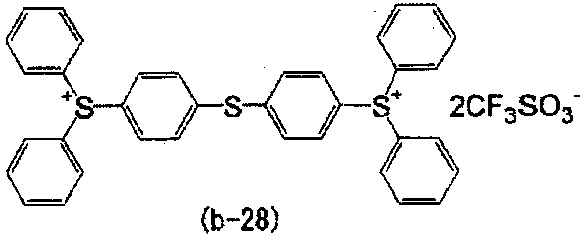

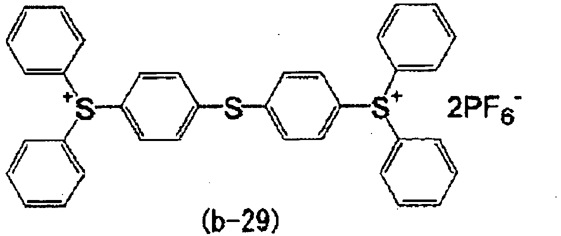

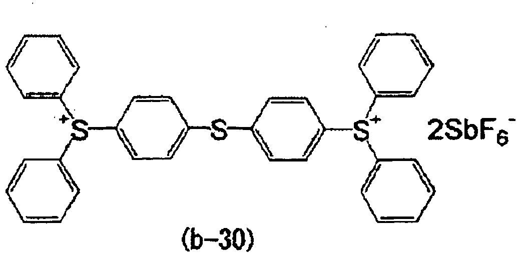

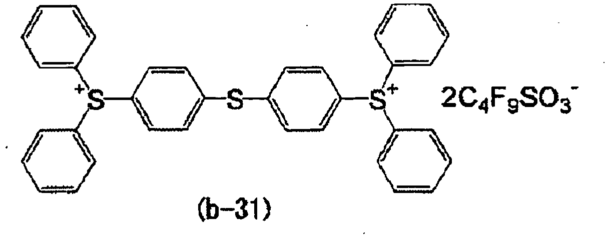

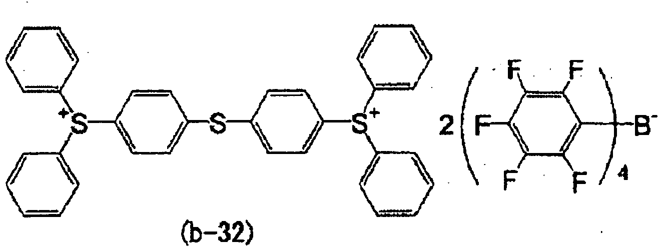

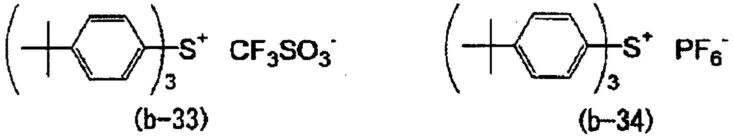

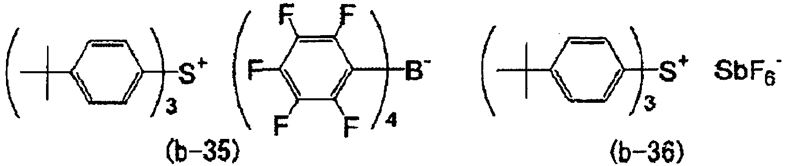

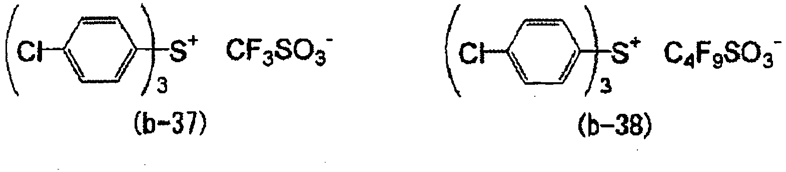

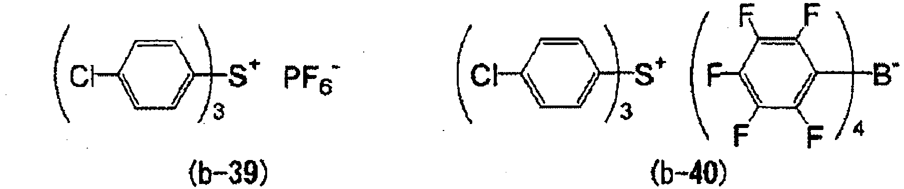

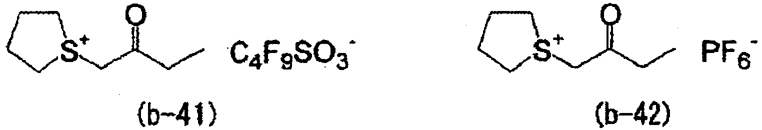

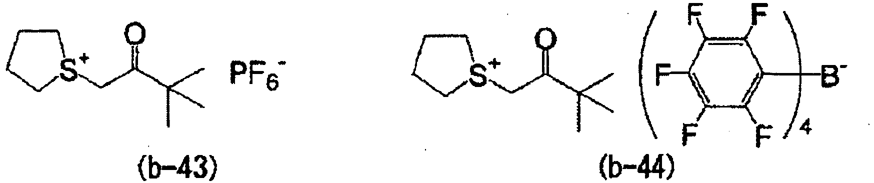

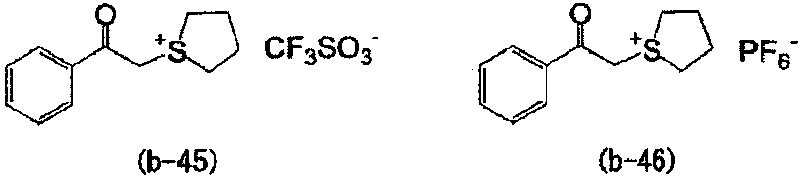

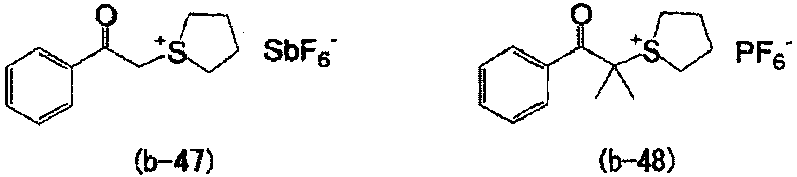

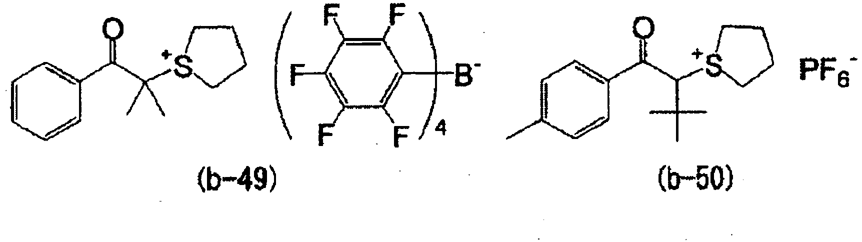

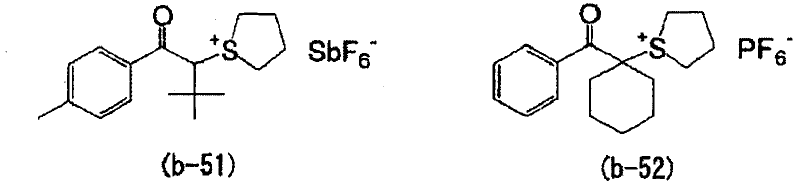

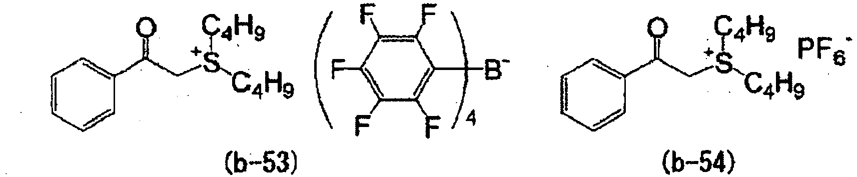

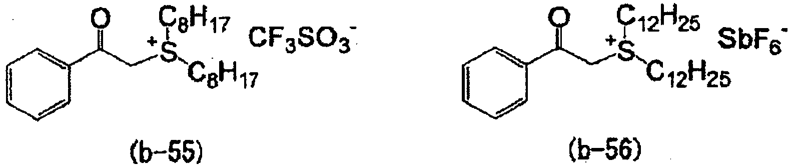

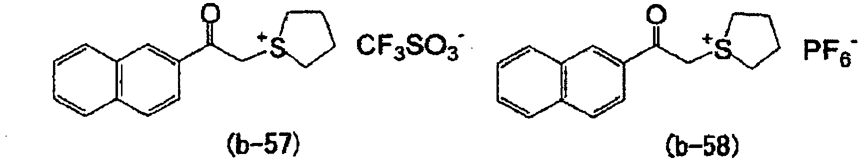

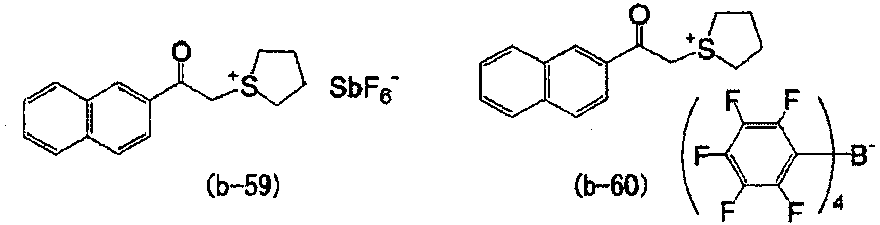

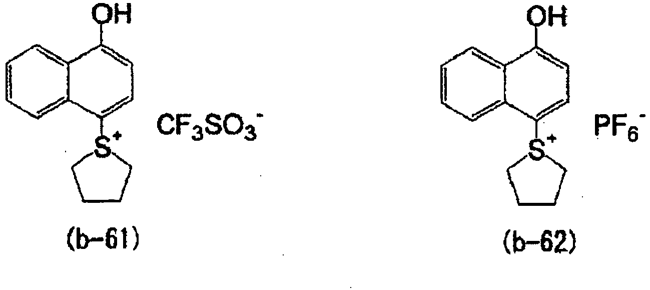

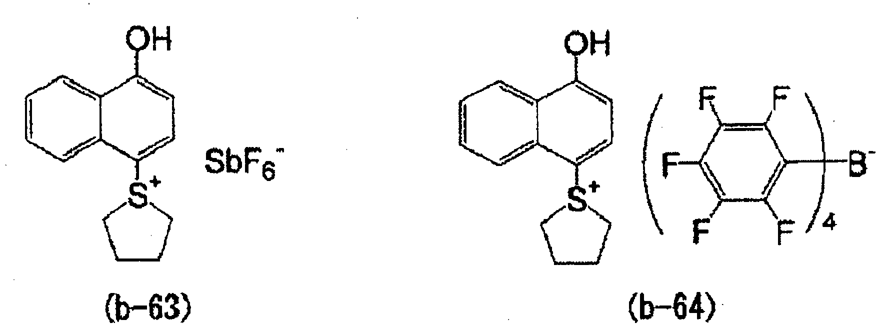

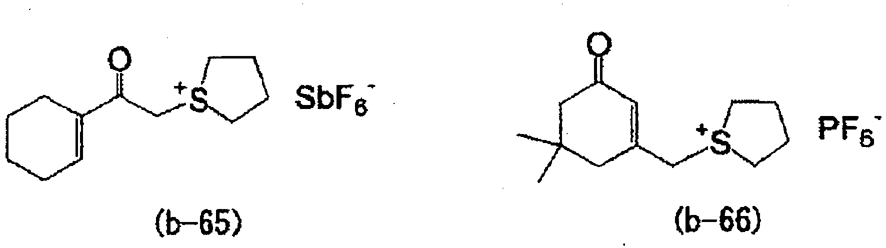

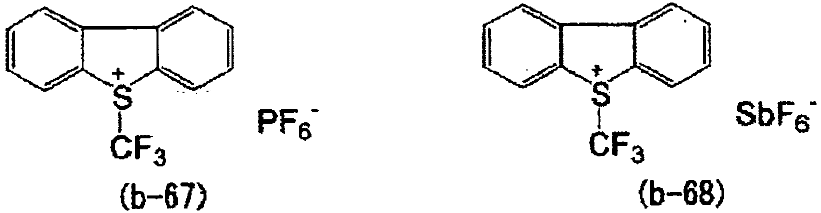

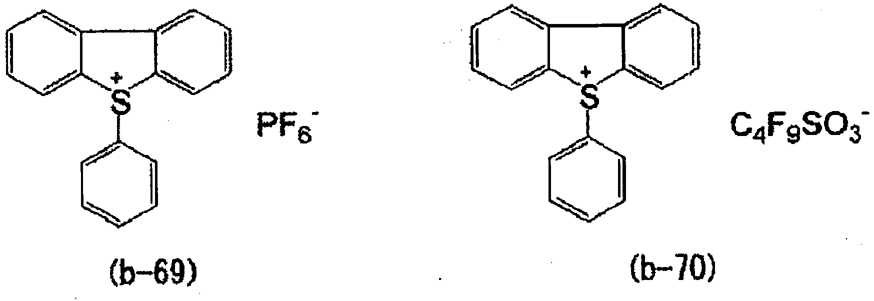

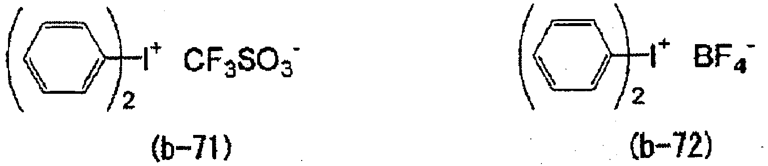

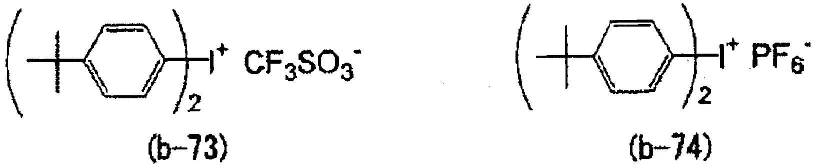

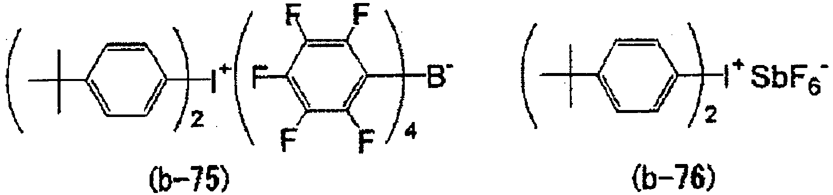

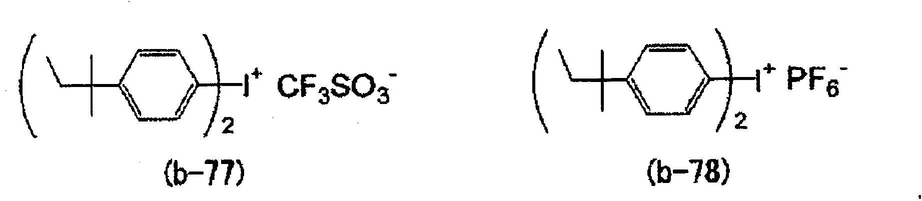

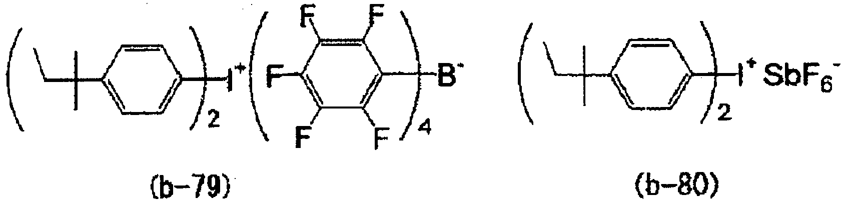

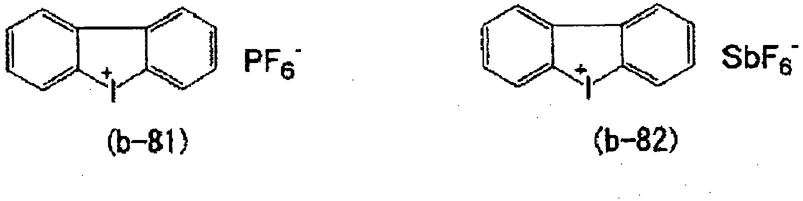

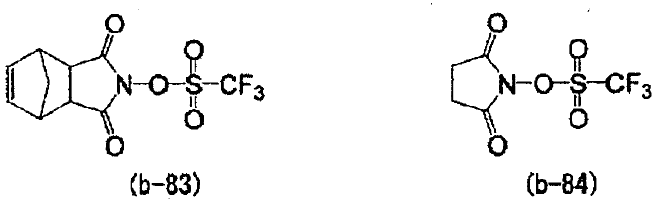

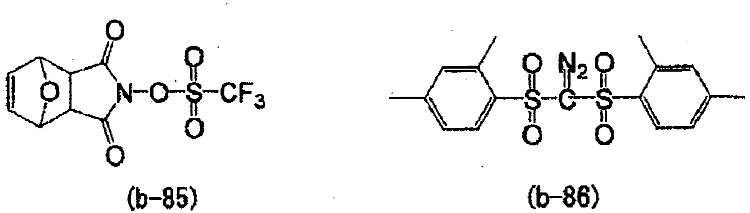

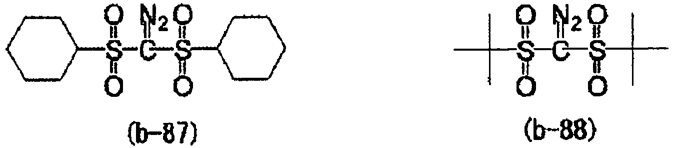

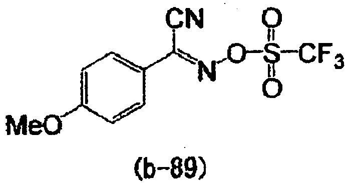

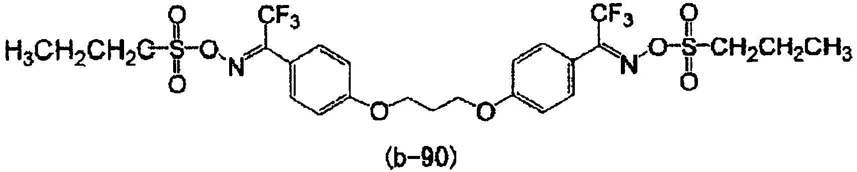

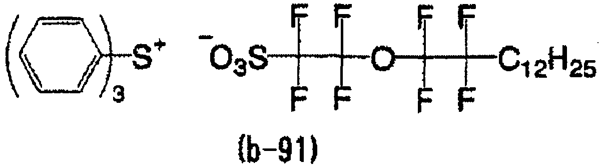

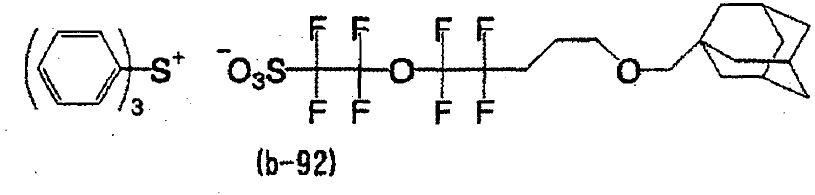

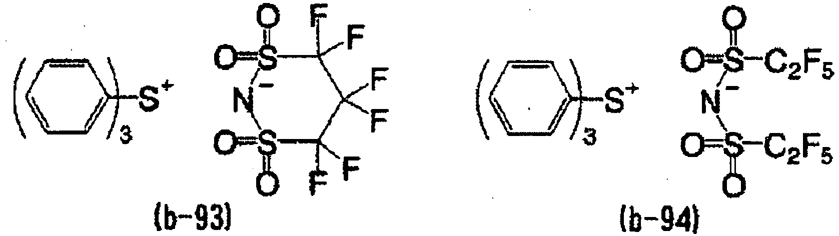

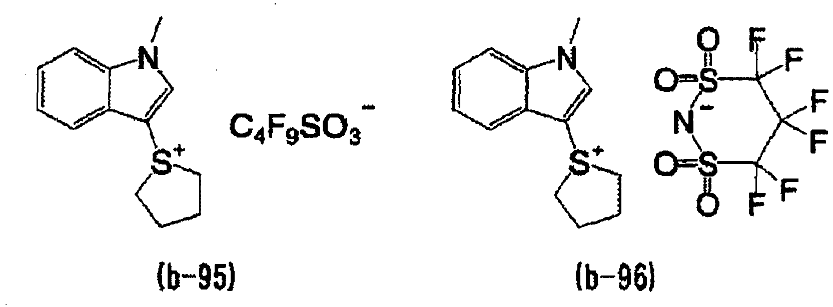

In the ink composition of the present invention, the total amount of polymerization initiator used is preferably 0.01 to 35 wt % relative to the total amount of polymerizable compound, including an N-vinyllactam, used, more preferably 0.5 to 20 wt %, and yet more preferably 1.0 to 15 wt %. The ink composition can be cured with 0.01 wt % or greater of the polymerization initiator, and a cured film having a uniform degree of curing can be obtained with 35 wt % or less.

The total amount of polymerization initiator in the ink composition is preferably 9 wt % or greater, and more preferably 12 wt % or greater. It is also preferably no greater than 25 wt %, and more preferably no greater than 20 wt %.

It is preferable for the total amount of polymerization initiator to be in the above-mentioned range since an ink composition having excellent curability can be obtained and, furthermore, a cured film having a uniform degree of curing can be obtained.

Furthermore, when a sensitizing colorant, which will be described later, is used in the ink composition of the present invention, the total amount of polymerization initiator used is preferably 200:1 to 1:200 relative to the sensitizing colorant as a ratio by weight of polymerization initiator : sensitizing colorant, more preferably 50:1 to 1:50, and yet more preferably 20:1 to 1:5.

### (D) Colorant

Although it is not particularly necessary to form a colored image when the ink composition of the present invention is used for formation of an image area of a lithographic printing plate, etc., in order to improve the visibility of an image area that is formed or in an attempt to form a colored image using the ink composition, it may contain a colorant.

The coloring agent that can be used in the present invention is not particularly limited, but a pigment and an oil-soluble dye that have excellent weather resistance and rich color reproduction are preferable, and it may be selected from any known coloring agent such as a soluble dye. It is preferable that the colorant that can be suitably used in the ink composition or the inkjet recording ink composition of the present invention does not function as a polymerization inhibitor in a polymerization reaction, which is a curing reaction. This is because the sensitivity of the curing reaction by actinic radiation should not be degraded.

### Pigment

The pigment that can be used in the present invention is not particularly limited and, for example, organic and inorganic pigments having the numbers below described in the Color Index may be used.

That is, as a red or magenta pigment, Pigment Red 3, 5, 19, 22, 31, 38, 42, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 208, 216, 226, or 257, Pigment Violet 3, 19, 23, 29, 30, 37, 50, or 88, and Pigment Orange 13, 16, 20, or 36;
as a blue or cyan pigment, Pigment Blue 1, 15, 15:1, 15:2, 15:3, 15:4, 15:6, 16, 17-1, 22, 27, 28, 29, 36, or 60;
as a green pigment, Pigment Green 7, 26, 36, or 50;
as a yellow pigment, Pigment Yellow 1, 3, 12, 13, 14, 17, 34, 35, 37, 55, 74, 81, 83, 93, 94, 95, 97, 108, 109, 110, 120, 137, 138, 139, 153, 154, 155, 157, 166, 167, 168, 180, 185, or 193;
as a black pigment, Pigment Black 7, 28, or 26;
as a white pigment, Pigment White 6, 18, or 21, etc. may be used according to the intended application.

### Oil-soluble dye

The oil-soluble dye that can be used in the present invention is explained below.

The oil-soluble dye that can be used in the present invention means a dye that is substantially insoluble in water. Specifically, the solubility in water at 25°C (the mass of dye that can be dissolved in 100 g of water) is no greater than 1 g, preferably no greater than 0.5 g, and more preferably no greater than 0.1 g. Therefore, the oil-soluble dye means a so-called water-insoluble pigment or an oil-soluble dye, and among these the oil-soluble dye is preferable.

Among the oil-soluble dyes that can be used in the present invention, as a yellow dye, any may be used. Examples thereof include aryl or heteryl azo dyes having a coupling component such as a phenol, a naphthol, an aniline, a pyrazolone, a pyridone, or an open-chain active methylene compound; azomethine dyes having a coupling component such as an open-chain active methylene compound; methine dyes such as benzylidene dyes and monomethineoxonol dyes; quinone dyes such as naphthoquinone dyes and anthraquinone dyes; and other dye species such as quinophthalone dyes, nitro/nitroso dyes, acridine dyes, and acridinone dyes.

Among the above-mentioned oil-soluble dyes that can be used in the present invention, as a magenta dye, any may be used. Examples thereof include aryl or heteryl azo dyes having a coupling component such as a phenol, a naphthol, or an aniline; azomethine dyes having a coupling component such as a pyrazolone or a pyrazolotriazole; methine dyes such as arylidene dyes, styryl dyes, merocyanine dyes, and oxonol dyes; carbonium dyes such as diphenylmethane dyes, triphenylmethane dyes, and xanthene dyes; quinone dyes such as naphthoquinones, anthraquinones, or anthrapyridones; and condensed polycyclic dyes such as dioxazine dyes.

Among the oil-soluble dyes that can be used in the present invention, as a cyan dye, any may be used. Examples thereof include indoaniline dyes, indophenol dyes, and azomethine dyes having a coupling component such as a pyrrolotriazole; polymethine dyes such as cyanine dyes, oxonol dyes, and merocyanine dyes; carbonium dyes such as diphenylmethane dyes, triphenylmethane dyes, and xanthene dyes; phthalocyanine dyes; anthraquinone dyes; aryl or heteryl azo dyes having a coupling component such as a phenol, a naphthol, or an aniline; and indigo/thioindigo dyes.

The above-mentioned dyes may be dyes that exhibit respective colors of yellow, magenta, and cyan only after a part of the chromophore dissociates, and in that case the counter cation may be an inorganic cation such as an alkali metal or ammonium, may be an organic cation such as pyridinium or a quaternary ammonium salt, or may be a polymer cation having the above cation as a partial structure.

Although not limited to the following, preferred specific examples thereof include Cl Solvent Black 3, 7, 27, 29, and 34; Cl Solvent Yellow 14, 16, 19, 29, 30, 56, 82, 93, and 162; Cl Solvent Red 1, 3, 8, 18, 24, 27, 43, 49, 51, 72, 73, 109, 122, 132, and 218; Cl Solvent Violet 3; Cl Solvent Blue 2, 11, 25, 35, 38, 67, and 70; Cl Solvent Green 3 and 7; and Cl Solvent Orange 2.

Particularly preferred examples thereof include Nubian Black PC-0850, Oil Black HBB, Oil Yellow 129, Oil Yellow 105, Oil Pink 312, Oil Red 5B, Oil Scarlet 308, Vali Fast Blue 2606, Oil Blue BOS (manufactured by Orient Chemical Industries, Ltd.), Aizen Spilon Blue GNH (manufactured by Hodogaya Chemical Co., Ltd.), Neopen Yellow 075, Neopen Magenta SE1378, Neopen Blue 808, Neopen Blue FF4012, and Neopen Cyan FF4238 (manufactured by BASF).

In the present invention, the oil-soluble dye may be used singly or in a combination of two or more types.

Furthermore, another colorant such as a water-soluble dye, a disperse dye, or a pigment may be contained as necessary in a range that does not interfere with the effects of the present invention.

In the present invention, a disperse dye may be used in a range that enables it to be dissolved in a water-immiscible organic solvent. Disperse dyes generally include water-soluble dyes, but in the present invention it is preferable for the disperse dye to be used in a range such that it dissolves in a water-immiscible organic solvent. Specific preferred examples of the disperse dye include Cl Disperse Yellow 5, 42, 54, 64, 79, 82, 83, 93, 99, 100, 119, 122, 124, 126, 160, 184:1, 186, 198, 199, 201, 204, 224, and 237; Cl Disperse Orange 13, 29, 31:1, 33, 49, 54, 55, 66, 73, 118, 119, and 163; Cl Disperse Red 54, 60, 72, 73, 86, 88, 91, 92, 93, 111, 126, 127, 134, 135, 143, 145, 152, 153, 154, 159, 164, 167:1, 177, 181, 204, 206, 207, 221, 239, 240, 258, 277, 278, 283, 311, 323, 343, 348, 356, and 362; Cl Disperse Violet 33; Cl Disperse Blue 56, 60, 73, 87, 113, 128, 143, 148, 154, 158, 165, 165:1, 165:2, 176, 183, 185, 197, 198, 201, 214, 224, 225, 257, 266, 267, 287, 354, 358, 365, and 368; and Cl Disperse Green 6:1 and 9.

The coloring agent that can be used in the present invention is preferably added to the ink composition or the inkjet recording ink composition of the present invention and then dispersed in the ink to an appropriate degree. For dispersion of the coloring agent, for example, a dispersing machine such as a ball mill, a sand mill, an attritor, a roll mill, an agitator, a Henschel mixer, a colloidal mill, an ultrasonic homogenizer, a pearl mill, a wet type jet mill, or a paint shaker may be used.

The coloring agent may be added directly to the ink composition of the present invention, but in order to improve dispersibility it may be added in advance to a solvent or a dispersing medium such as a radically polymerizable compound used in the present invention.

In the present invention, in order to avoid the problem of the solvent resistance being degraded when the solvent remains in the cured image and the VOC (Volatile Organic Compound) problem of the residual solvent, it is preferable to add the coloring agent in advance to a dispersing medium such as a radically polymerizable compound. As a polymerizable compound used, it is preferable in terms of dispersion suitability to select a monomer having the lowest viscosity.

These colorants may be used by appropriately selecting one type or two or more types according to the intended purpose of the ink composition.

When a colorant such as a pigment that is present as a solid in the ink composition of the present invention is used, it is preferable for the colorant, the dispersant, the dispersing medium, dispersion conditions, and filtration conditions to be set so that the average particle size of colorant particles is preferably 0.005 to 0.5 µm, more preferably 0.01 to 0.45 µm, and yet more preferably 0.015 to 0.4 µm. By such control of particle size, clogging of a head nozzle can be suppressed, and the ink storage stability, the ink transparency, and the curing sensitivity can be maintained.

The content of the colorant in the ink composition of the present invention is appropriately selected according to the color and the intended purpose, and is generally preferably 0.01 to 30 wt % relative to the weight of the entire ink composition.

### (E) Dispersant

It is preferable to add a dispersant when dispersing the colorant. The type of dispersant is not particularly limited, but it is preferable to use a polymeric dispersant. Examples of the polymeric dispersant include polymeric dispersants such as DisperBYK-101, DisperBYK-102, DisperBYK-103, DisperBYK-106, DisperBYK-111, DisperBYK-161, DisperBYK-162, DisperBYK-163, DisperBYK-164, DisperBYK-166, DisperBYK-167, DisperBYK-168, DisperBYK-170, DisperBYK-171, DisperBYK-174, and DisperBYK-182 (all manufactured by BYK Chemie), EFKA4010, EFKA4046, EFKA4080, EFKA5010, EFKA5207, EFKA5244, EFKA6745, EFKA6750, EFKA7414, EFKA7462, EFKA7500, EFKA7570, EFKA7575, and EFKA7580 (all manufactured by EFKA Additives), Disperse Aid 6, Disperse Aid 8, Disperse Aid 15, and Disperse Aid 9100 (manufactured by San Nopco Limited); various types of Solsperse dispersants such as Solsperse 3000, 5000, 9000, 12000, 13240, 13940, 17000, 24000, 26000, 28000, 32000, 36000, 39000, 41000, and 71000 (manufactured by Avecia); Adeka Pluronic L31, F38, L42, L44, L61, L64, F68, L72, P95, F77, P84, F87, P94, L101, P103, F108, L121, and P-123 (manufactured by Adeka Corporation), Isonet S-20 (manufactured by Sanyo Chemical Industries, Ltd.), and Disparlon KS-860, 873SN, and 874 (polymeric dispersant), #2150 (aliphatic poly carboxylic acid), and #7004 (polyether ester type) (manufactured by Kusumoto Chemicals, Ltd.).

It is also possible to use in combination a pigment derivative such as a phthalocyanine derivative (product name: EFKA-745 (manufactured by EFKA)), or Solsperse 5000, 12000, or 22000 (manufactured by Avecia).

The content of the dispersant in the ink composition of the present invention is appropriately selected according to the intended purpose, and is generally preferably 0.01 to 5 wt % relative to the weight of the entire ink composition.

### (F) Surfactant

It is preferable to add a surfactant to the ink composition of the present invention in order to impart long-term discharge stability.

As the surfactant, those described in JP-A-62-173463 and 62-183457 can be cited. Examples thereof include anionic surfactants such as dialkylsulfosuccinic acid salts, alkylnaphthalene sulfonic acid salts, and fatty acid salts, nonionic surfactants such as polyoxyethylene alkyl ethers, polyoxyethylene alkyl aryl ethers, acetylene glycols, and polyoxyethylene/polyoxypropylene block copolymers, and cationic surfactants such as alkylamine salts and quaternary ammonium salts. An organofluoro compound may be used instead of the above-mentioned surfactant. The organofluoro compound is preferably hydrophobic. Examples of the organofluoro compound include fluorine-based surfactants, oillike fluorine-based compounds (e.g. fluorine oil), solid fluorine compound resins (e.g. tetrafluoroethylene resin), and those described in JP-B-57-9053 (paragraphs 8 to 17) and JP-A-62-135826.

The content of the surfactant in the ink composition of the present invention is appropriately selected according to the intended purpose and is generally preferably 0.0001 to 1 wt % relative to the weight of the entire ink composition.

The ink composition of the present invention may comprise another component as necessary. Examples of the other component include a sensitizing colorant, a cosensitizer, another polymerizable compound, a UV absorber, an antioxidant, an antifading agent, a conductive salt, a solvent, a polymer compound, and a basic compound.

### Sensitizing dye

The ink composition of the present invention may contain a sensitizing dye in order to promote decomposition of the above-mentioned polymerization initiator by absorbing specific actinic radiation, in particular when used for inkjet recording. The sensitizing dye absorbs specific actinic radiation and attains an electronically excited state. The sensitizing dye in the electronically excited state causes actions such as electron transfer, energy transfer, or heat generation upon contact with the polymerization initiator. This causes the polymerization initiator to undergo a chemical change and decompose, thus forming a radical, an acid, or a base.

Preferred examples of the sensitizing dye include those that belong to compounds below and have an adsorption wavelength in the region of 350 nm to 450 nm.

Polynuclear aromatic compounds (e.g. pyrene, perylene, triphenylene), xanthenes (e.g. fluorescein, eosin, erythrosine, rhodamine B, rose bengal), cyanines (e.g. thiacarbocyanine, oxacarbocyanine), merocyanines (e.g. merocyanine, carbomerocyanine), thiazines (e.g. thionine, methylene blue, toluidine blue), acridines (e.g. acridine orange, chloroflavin, acriflavine), anthraquinones (e.g. anthraquinone), squaryliums (e.g. squarylium), and coumarins (e.g. 7-diethylamino-4-methylcoumarin).

Preferred examples of the sensitizing dye include compounds represented by Formulae (IX) to (XIII) below:

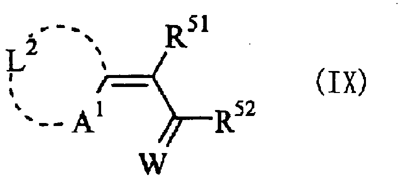

In Formula (IX), A¹ denotes a sulfur atom or NR⁵⁰, R⁵⁰ denotes an alkyl group or an aryl group, L² denotes a non-metallic atomic group forming a basic nucleus of a dye in cooperation with a neighboring A¹ and the neighboring carbon atom, R⁵¹ and R⁵² independently denote a hydrogen atom or a monovalent non-metallic atomic group, and R⁵¹ and R⁵² may be bonded together to form an acidic nucleus of a dye. W denotes an oxygen atom or a sulfur atom.

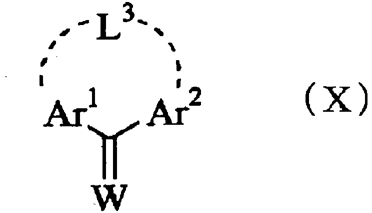

In Formula (X), Ar¹ and Ar² independently denote an aryl group and are connected to each other via a bond of -L³-. Here, L³ denotes -O- or -S-. W has the same meaning as that shown in Formula (IX).

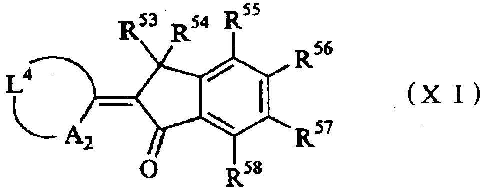

In Formula (XI), A₂ denotes a sulfur atom or NR⁵⁹, L⁴ denotes a non-metallic atomic group forming a basic nucleus of a dye in cooperation with the neighboring A₂ and carbon atom, R⁵³, R⁵⁴, R⁵⁵, R⁵⁶, R⁵⁷, and R⁵⁸ independently denote a monovalent non-metallic atomic group, and R⁵⁹ denotes an alkyl group or an aryl group.

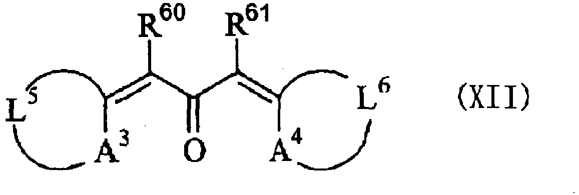

In Formula (XII), A³ and A⁴ independently denote -S-, -NR⁶²-, or -NR⁶³-, R⁶² and R⁶³ independently denote a substituted or unsubstituted alkyl group, or a substituted or unsubstituted aryl group, L⁵ and L⁶ independently denote a non-metallic atomic group forming a basic nucleus of a dye in cooperation with the neighboring A³ and A⁴ and neighboring carbon atom, and R⁶⁰ and R⁶¹ independently denote a hydrogen atom or a monovalent non-metallic atomic group, or are bonded to each other to form an aliphatic or aromatic ring.

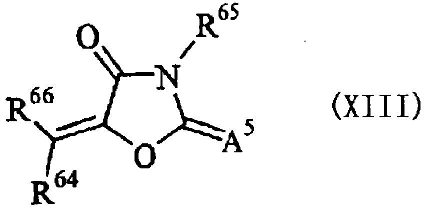

In Formula (XIII), R⁶⁶ denotes an aromatic ring or a hetero ring, which may have a substituent, and A⁵ denotes an oxygen atom, a sulfur atom, or -NR⁶⁷-. R⁶⁴, R⁶⁵, and R⁶⁷ independently denote a hydrogen atom or a monovalent non-metallic atomic group, and R⁶⁷ and R⁶⁴, and R⁶⁵ and R⁶⁷ may be bonded to each other to form an aliphatic or aromatic ring.

Specific examples of the compounds represented by Formulae (IX) to (XIII) include (E-1) to (E-20) listed below.

In some of the compound examples below, the hydrocarbon chain is described by a simplified structural formula in which symbols for carbon (C) and hydrogen (H) are omitted.

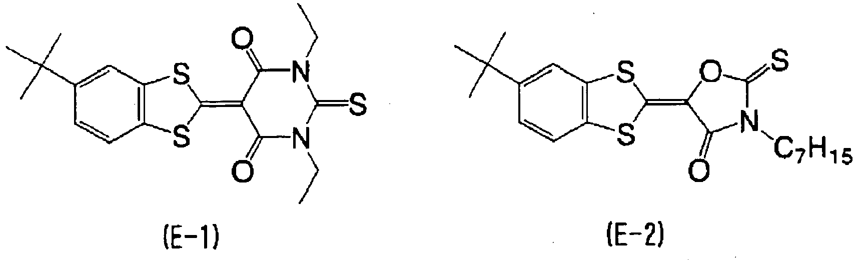

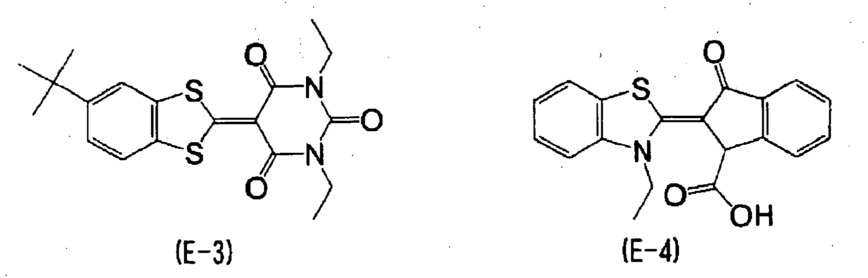

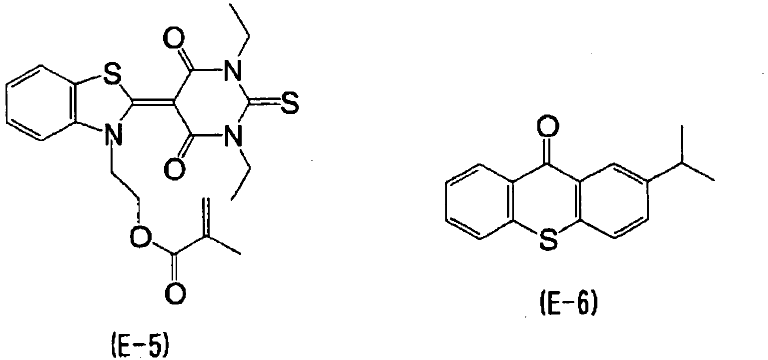

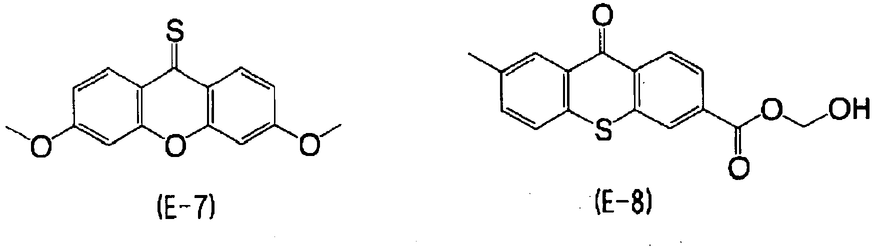

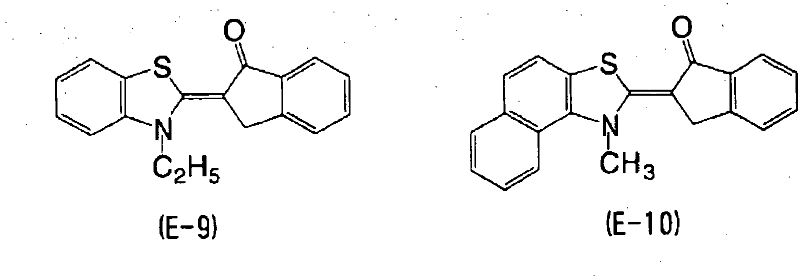

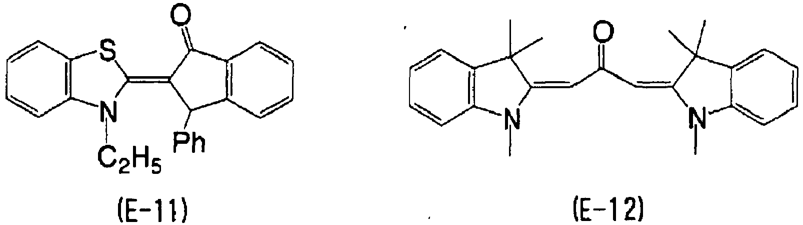

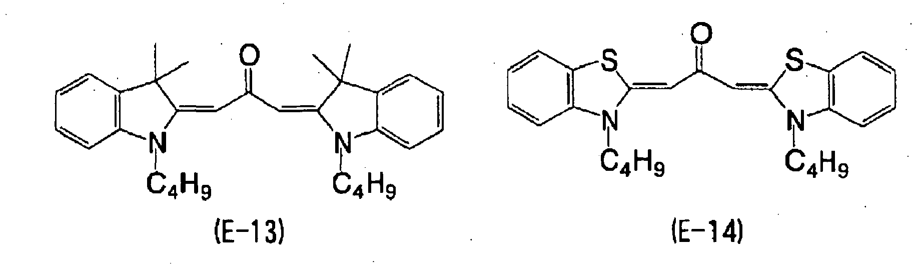

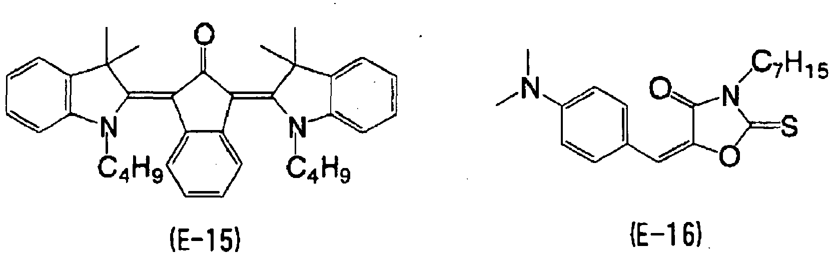

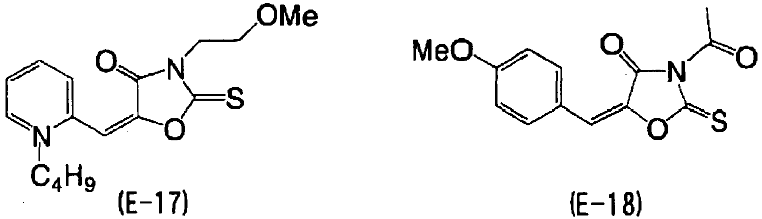

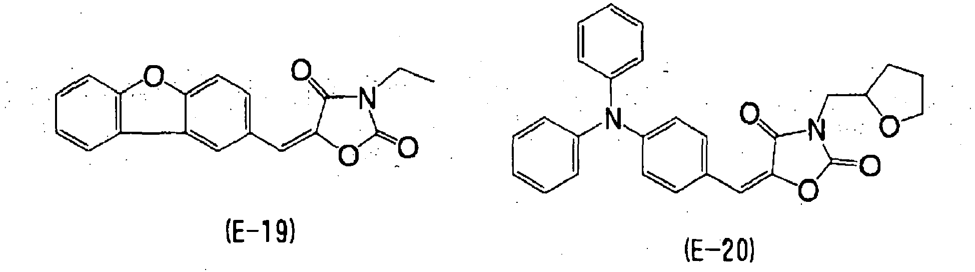

The content of the sensitizing colorant in the ink composition of the present invention is appropriately selected according to the intended purpose, but it is generally preferably 0.05 to 4 wt % relative to the weight of the entire ink composition.

### Cosensitizer

The ink composition of the present invention preferably comprises a cosensitizer. In the present invention, the cosensitizer has the function of further improving the sensitivity of the sensitizing dye to actinic radiation or the function of suppressing inhibition by oxygen of polymerization of a polymerizable compound, etc.

Examples of such a cosensitizer include amines such as compounds described in M. R. Sander et al., 'Journal of Polymer Society', Vol. 10, p. 3173 (1972), JP-B-44-20189, JP-A-51-82102, JP-A-52-134692, JP-A-59-138205, JP-A-60-84305, JP-A-62-18537, JP-A-64-33104, and Research Disclosure No. 33825, and specific examples thereof include triethanolamine, ethyl p-dimethylaminobenzoate, p-formyldimethylaniline, and p-methylthiodimethylaniline.

Other examples of the cosensitizer include thiols and sulfides such as thiol compounds described in JP-A-53-702, JP-B-55-500806, and JP-A-5-142772, and disulfide compounds of JP-A-56-75643, and specific examples thereof include 2-mercaptobenzothiazole, 2-mercaptobenzoxazole, 2-mercaptobenzimidazole, 2-mercapto-4(3H)-quinazoline, and β-mercaptonaphthalene.

Yet other examples of the cosensitizer include amino acid compounds (e.g. N-phenylglycine, etc.), organometallic compounds described in JP-B-48-42965 (e.g. tributyltin acetate, etc.), hydrogen-donating compounds described in JP-B-55-34414, sulfur compounds described in JP-A-6-308727 (e.g. trithiane, etc.), and phosphorus compounds described in JP-A-6-250387 (diethylphosphite, etc.).

The content of the cosensitizer in the ink composition of the present invention is appropriately selected according to the intended purpose, but it is generally preferably 0.05 to 4 wt % relative to the weight of the entire ink composition.

### Other polymerizable compound

The ink composition of the present invention may comprise in combination as necessary a cationic polymerizable compound as another polymerizable compound. When a cationic polymerizable compound is used in combination, it is preferable to use a cationic polymerization initiator in combination as a polymerization initiator.

The cationically polymerizable compound used in the present invention is not particularly limited as long as it is a compound that undergoes a polymerization reaction by virtue of an acid generated by the photo-acid generator and is cured, and various types of cationically polymerizable monomers known as photo-cationically polymerizable monomers may be used. Examples of the cationically polymerizable monomer include epoxy compounds, vinyl ether compounds, oxetane compounds described in JP-A-6-9714, JP-A-2001-31892, JP-A-2001-40068, JP-A-2001-55507, JP-A-2001-310938, JP-A-2001-310937, JP-A-2001-220526, etc.

As the cationically polymerizable compound, for example, a cationically polymerizable type photocuring resin is known, and in recent years cationically photopolymerizable type photocuring resins sensitized to a visible light wavelength region of 400 nm or longer have been disclosed in, for example, JP-A-6-43633 and JP-A-8-324137. They may also be applied to the ink composition of the present invention.

### UV absorber

A UV absorber may be used from the viewpoint of improving the weather resistance of an image obtained and preventing discoloration.

The UV absorbers include benzotriazole compounds described in JP-A-58-185677, JP-A-61-190537, JP-A-2-782, JP-A-5-197075 and JP-A-9-34057; benzophenone compounds described in JP-A-46-2784, JP-A-5-194483 and US Pat. No. 3,214,463; cinnamic acid compounds described in JP-B-48-30492, JP-B-56-21141 and JP-A-10-88106; triazine compounds described in JP-A-4-298503, JP-A-8-53427, JP-A-8-239368, JP-A-10-182621 and JP-W-8-501291 (the term "JP-W" as used herein means an unexamined published international patent application); compounds described in Research Disclosure No. 24239; and compounds represented by stilbene and benzoxazole compounds, which absorb ultraviolet rays to emit fluorescence, the so-called fluorescent brightening agents.

The amount thereof added is appropriately selected according to the intended application, and it is generally on the order of 0.5 to 15 wt % on the basis of the solids content in the ink composition.

### Antioxidant

In order to improve the stability of the ink composition, an antioxidant may be added. Examples of the antioxidant include those described in Laid-open European Patent Nos. 223739, 309401, 309402, 310551, 310552, and 459416, Laid-open German Patent No. 3435443, JP-A-54-48535, JP-A-62-262047, JP-A-63-113536, JP-A-63-163351, JP-A-2-262654, JP-A-2-71262, JP-A-3-121449, JP-A-5-61166, JP-A-5-119449, and US Pat. Nos. 4,814,262 and 4,980,275.

The amount thereof added is appropriately selected according to the intended application, and it is preferably on the order of 0.1 to 8 wt % on the basis of the solids content in the ink composition.

### Antifading agent

The ink composition of the present invention may employ various organic and metal complex antifading agents. The organic antifading agents include hydroquinones, alkoxyphenols, dialkoxyphenols, phenols, anilines, amines, indanes, chromans, alkoxyanilines, and heterocycles, and the metal complex antifading agents include nickel complexes and zinc complexes. More specifically, there can be used compounds described in patents cited in Research Disclosure, No. 17643, Items VII-I to J, ibid., No.15162, ibid., No.18716, page 650, left-hand column, ibid., No. 36544, page 527, ibid., No. 307105, page 872, and ibid., No. 15162, and compounds contained in general formulae and compound examples of typical compounds described in JP-A-62-21572, pages 127 to 137.

The amount thereof added is appropriately selected according to the intended application, and it is preferably on the order of 0.1 to 8 wt % on the basis of the solids content in the ink composition.

### Conductive salt

The ink composition of the present invention may contain, for the purpose of controlling discharge properties, a conductive salt such as potassium thiocyanate, lithium nitrate, ammonium thiocyanate, or dimethylamine hydrochloride.

### Solvent

It is also effective to add a trace amount of organic solvent to the ink composition of the present invention in order to improve the adhesion to a recording medium.

With regard to the solvent that can be used in the ink composition of the present invention, when a resin is used in the internal structure of the polymerizable particles, it is preferable for a difference in the solubility parameter value (SP value) between the resin and the solvent used to be 2 or greater, and more preferably 3 or greater.

Examples of the solvent include ketone-based solvents such as acetone, methyl ethyl ketone, and diethyl ketone, alcohol-based solvents such as methanol, ethanol, 2-propanol, 1-propanol, 1-butanol, and tert-butanol, chlorine-based solvents such as chloroform and methylene chloride, aromatic-based solvents such as benzene and toluene, ester-based solvents such as ethyl acetate, butyl acetate, and isopropyl acetate, ether-based solvents such as diethyl ether, tetrahydrofuran, and dioxane, and glycol ether-based solvents such as ethylene glycol monomethyl ether and ethylene glycol dimethyl ether.

In this case, it is effective if the amount thereof added is in a range that does not cause problems with the solvent resistance or the VOC, and the amount is preferably in the range of 0.1 to 5 wt % relative to the total amount of the ink composition, and more preferably 0.1 to 3 wt %.

### High molecular weight compound

The ink composition may contain various types of high molecular weight compounds in order to adjust film physical properties. Examples of the high molecular weight compounds include acrylic polymers, polyvinylbutyral resins, polyurethane resins, polyamide resins, polyester resins, epoxy resins, phenol resins, polycarbonate resins, polyvinylbutyral resins, polyvinylformal resins, shellac, vinylic resins, acrylic resins, rubber-based resins, waxes, and other natural resins. They may be used in a combination of two or more types. Among these, a vinylic copolymer obtained by copolymerization of an acrylic monomer is preferable. Furthermore, as a copolymer component of the high molecular weight compound, a copolymer containing as a structural unit a 'carboxyl group-containing monomer', an 'alkyl methacrylate ester', or an 'alkyl acrylate ester' may preferably be used.

In addition to the above, the composition may contain as necessary, for example, a leveling additive, a matting agent, a wax for adjusting film physical properties, or a tackifier in order to improve the adhesion to a recording medium such as polyolefin or PET, the tackifier not inhibiting polymerization.

Specific examples of the tackifier include high molecular weight tacky polymers described on pp. 5 and 6 of JP-A-2001-49200 (e.g. a copolymer formed from an ester of (meth)acrylic acid and an alcohol having an alkyl group with 1 to 20 carbons, an ester of (meth)acrylic acid and an alicyclic alcohol having 3 to 14 carbons, or an ester of (meth)acrylic acid and an aromatic alcohol having 6 to 14 carbons), and a low molecular weight tackifying resin having a polymerizable unsaturated bond.

### Properties of ink composition

In the present invention, the ink composition has a viscosity at 25°C of 5 to 40 mPa·s, preferably 7 to 30 mPa·s. Furthermore, the viscosity of the ink composition at the discharge temperature (e.g. 25°C to 80°C, and preferably 25°C to 50°C) is preferably 3 to 15 mPa·s, and more preferably 3 to 13 mPa·s. With regard to the ink composition of the present invention, it is preferable that its component ratio is appropriately adjusted so that the viscosity is in the above-mentioned range. When the viscosity at room temperature is set to be high, even when a porous recording medium is used, penetration of the ink into the recording medium can be prevented, uncured monomer can be reduced, and the odor can be reduced. Furthermore, ink spreading when ink droplets have landed can be suppressed, and as a result there is the advantage that the image quality is improved.

The surface tension of the ink composition of the present invention at 25°C is preferably 20 to 35 mN/m, and yet more preferably 23 to 33 mN/m. When recording is carried out on various types of recording medium such as polyolefin, PET, coated paper, and uncoated paper, from the viewpoint of spread and penetration, it is preferably at least 20 mN/m, and from the viewpoint of wettability it is preferably not more than 35 mN/m.

### (2) Inkjet recording method and inkjet recording device

The ink composition of the present invention is used for inkjet recording.

The inkjet recording method of the present invention is a method for forming an image by discharging the ink composition of the present invention onto a recording medium (support, recording material, etc.) for inkjet recording and curing the ink by irradiating the ink composition so discharged onto the recording medium with actinic radiation.

More particularly, the inkjet recording method of the present invention comprises (a¹) a step of discharging the ink composition of the present invention onto a recording medium and (b¹) a step of curing the ink composition by irradiating the ink composition so discharged with actinic radiation,

The inkjet recording method of the present invention comprises the steps (a¹) and (b¹) above and thus forms an image from the ink composition cured on the recording medium.

The step (a¹) of the inkjet recording method of the present invention may employ an inkjet recording device that will be described in detail below.

### Inkjet recording device

An inkjet recording device used in the inkjet recording method of the present invention is not particularly limited, and any known inkjet recording device that can achieve an intended resolution may be used. That is, any known inkjet recording device, such as a commercial product, may be used in order to discharge an ink onto a recording medium in step (a¹) of the inkjet recording method of the present invention.

The inkjet recording device that can be used in the present invention is equipped with, for example, an ink supply system, a temperature sensor, and an actinic radiation source.

The ink supply comprises, for example, a main tank containing the ink composition of the present invention, a supply pipe, an ink supply tank immediately before an inkjet head, a filter, and a piezo system inkjet head. The piezo system inkjet head may be driven so as to discharge a multisize dot of 1 to 100 pL, and preferably 8 to 30 pL, at a resolution of 320 x 320 to 4,000 x 4,000dpi, preferably 400 x 400 to 1,600 x 1,600dpi, and more preferably 720 x 720 dpi. Here, dpi referred to in the present invention means the number of dots per 2.54 cm.

As described above, since it is desirable for the radiation curing type ink to be discharged at a constant temperature, a section from the ink supply tank to the inkjet head is thermally insulated and heated. A method of controlling temperature is not particularly limited, but it is preferable to provide, for example, temperature sensors at a plurality of pipe section positions, and control heating according to the ink flow rate and the temperature of the surroundings. The temperature sensors may be provided on the ink supply tank and in the vicinity of the inkjet head nozzle. Furthermore, the head unit that is to be heated is preferably thermally shielded or insulated so that the device main body is not influenced by the temperature of the outside air. In order to reduce the printer start-up time required for heating, or in order to reduce the thermal energy loss, it is preferable to thermally insulate the head unit from other sections and also to reduce the heat capacity of the entire heated unit.

When the ink composition or the inkjet recording ink composition of the present invention is discharged using the above mentioned inkjet recording device, the ink composition is preferably discharged after being heated to preferably 25°C to 80°C, and more preferably 25°C to 50°C, so as to reduce the viscosity of the ink composition to preferably 3 to 15 mPa·s, and more preferably 3 to 13 mPa·s. An composition having an ink viscosity at 25°C of 5-40 mPa·s has a good discharge stability. By employing this method, high discharge stability can be realized.

The radiation curing type ink composition such as the ink composition of the present invention generally has a viscosity that is higher than that of a normal ink composition or a water-based ink used for an inkjet recording ink, and variation in viscosity due to a change in temperature at the time of discharge is large. Viscosity variation in the ink has a large effect on changes in liquid droplet size and changes in liquid droplet discharge speed and, consequently, causes the image quality to be degraded. It is therefore necessary to maintain the ink discharge temperature as constant as possible. In the present invention, the control range for the temperature is desirably ±5°C of a set temperature, preferably ±2°C of the set temperature, and more preferably ±1°C of the set temperature.

The step (b¹) of curing the discharged ink composition by irradiating the ink composition with actinic radiation is now explained.

The ink composition discharged onto the recording medium cures upon exposure to actinic radiation. This is due to an initiating species such as a radical, an acid, or a base being generated by decomposition of the polymerization initiator contained in the ink composition of the present invention by irradiation with actinic radiation, the initiating species functioning so as to make a polymerization reaction of a radically polymerizable compound take place and to promote it. In this process, if a sensitizing colorant is present together with the polymerization initiator in the ink composition, the sensitizing colorant in the system absorbs actinic radiation, becomes excited, and promotes decomposition of the polymerization initiator by contact with the polymerization initiator, thus enabling a curing reaction with higher sensitivity to be achieved.

The actinic radiation used in this process may include α rays, γ rays, an electron beam, X rays, UV rays, visible light, and IR rays. Although it depends on the absorption characteristics of the sensitizing dye, the peak wavelength of the actinic radiation is, for example, 200 to 600 nm, preferably 300 to 450 nm, and more preferably 350 to 420 nm.

Furthermore, in the present invention, the polymerization initiation system has sufficient sensitivity for low output actinic radiation. The actinic radiation is applied therefore so that the illumination intensity on the exposed surface is, for example, 10 to 4,000 mW/cm², and preferably 20 to 2,500 mW/cm².

As an actinic radiation source, a mercury lamp, a gas/solid laser, etc. are mainly used, and for UV photocuring inkjet a mercury lamp and a metal halide lamp are widely known. However, from the viewpoint of protection of the environment, there has recently been a strong desire for mercury not to be used, and replacement by a GaN semiconductor UV light emitting device is very useful from industrial and environmental viewpoints. Furthermore, LEDs (UV-LED) and LDs (UV-LD) have small dimensions, long life, high efficiency, and low cost, and their use as a photocuring inkjet light source can be expected.

Furthermore, light-emitting diodes (LED) and laser diodes (LD) may be used as the source of actinic radiation. In particular, when a UV ray source is needed, a UV-LED or a UV-LD may be used. For example, Nichia Corporation has marketed a violet LED having a wavelength of the main emission spectrum of between 365 nm and 420 nm. Furthermore, when a shorter wavelength is needed, US Pat. No. 6,084,250 discloses an LED that can emit actinic radiation whose wavelength is centered between 300 nm and 370 nm. Furthermore, another violet LED is available, and irradiation can be carried out with radiation of a different UV bandwidth. The actinic radiation source particularly preferable in the present invention is a UV-LED, and a UV-LED having a peak wavelength at 350 to 420 nm is particularly preferable.

The maximum illumination intensity of the LED on a recording medium is preferably 10 to 2,000 mW/cm², more preferably 20 to 1,000 mW/cm², and particularly preferably 50 to 800 mJ/cm².

The ink composition of the present invention is desirably exposed to such actinic radiation for, for example, 0.01 to 120 sec., and preferably 0.1 to 90 sec.

Irradiation conditions and a basic method for irradiation with actinic radiation are disclosed in JP-A-60-132767. Specifically, a light source is provided on either side of a head unit that includes an ink discharge device, and the head unit and the light source are made to scan by a so-called shuttle system. Irradiation with actinic radiation is carried out after a certain time (e.g. 0.01 to 0.5 sec., preferably 0.01 to 0.3 sec., and more preferably 0.01 to 0.15 sec.) has elapsed from when the ink has landed. By controlling the time from ink landing to irradiation so as to be a minimum in this way, it becomes possible to prevent the ink that has landed on a recording medium from spreading before being cured. Furthermore, since the ink can be exposed before it reaches a deep area of a porous recording medium that the light source cannot reach, it is possible to prevent monomer from remaining unreacted, and as a result the odor can be reduced.

Furthermore, curing may be completed using another light source that is not driven. WO99/54415 discloses, as an irradiation method, a method employing an optical fiber and a method in which a collimated light source is incident on a mirror surface provided on a head unit side face, and a recorded area is irradiated with UV light.

By employing such a recording method, it is possible to maintain a uniform dot diameter for landed ink even for various types of recording media having different surface wettability, thereby improving the image quality. In order to obtain a color image, it is preferable to superimpose colors in order from those with a low lightness. By superimposing inks in order from one with low lightness, it is easy for radiation to reach a lower ink, the curing sensitivity is good, the amount of residual monomer decreases, odor is reduced, and an improvement in adhesion can be expected. Furthermore, although it is possible to discharge all colors and then expose them at the same time, it is preferable to expose one color at a time from the viewpoint of promoting curing.

In this way, the ink composition of the present invention is cured by irradiation with actinic radiation in high sensitivity to thus form an image on the surface of the recording medium.

### (3) Lithographic printing plate and production process

It is possible to produce a lithographic printing plate by applying the ink composition of the present invention to a hydrophilic support by the inkjet recording method of the present invention and curing it.

A process for producing a lithographic printing plate by employing the inkjet recording method of the present invention (the process for producing a lithographic printing plate of the present invention) and a lithographic printing plate obtained thereby (the lithographic printing plate of the present invention) are explained below.

The lithographic printing plate of the present invention comprises a hydrophilic support and a hydrophobic image formed on the hydrophilic support. This process for producing a lithographic printing plate comprises the following steps.
(a²) a step of discharging the ink composition of the present invention onto a hydrophilic support, and
(b²) a step of curing the ink composition by irradiating the discharged ink composition with actinic radiation so as to form a hydrophobic image on the hydrophilic support by curing the ink composition.

That is, a lithographic printing plate can be produced in the same manner as in the inkjet recording method of the present invention except that a support having a hydrophilic surface that is suitable as a lithographic printing plate support is used as a recording medium.

Conventionally, a lithographic printing plate has been produced by imagewise exposing to light a so-called PS plate having an arrangement in which a lipophilic photosensitive resin layer is provided on a hydrophilic support as described above so as to solubilize or cure the exposed area and form an image, followed by dissolving and removing a non-image area.

On the other hand, the lithographic printing plate of the present invention can be formed by employing the process for producing a lithographic printing plate of the present invention (the inkjet recording method of the present invention) so as to discharge an ink composition directly onto the surface of a hydrophilic support in accordance with digitized image information and cure it to form a hydrophobic image area. This enables a lithographic printing plate to be prepared more easily than by the conventional method.

### Hydrophilic support used for lithographic printing plate

The lithographic printing plate of the present invention comprises a hydrophilic support and an hydrophobic image formed by the ink composition of the present invention on the support.

The support for lithographic printing plate (recording medium) onto which the ink composition of the present invention is discharged is not particularly limited, and a dimensionally stable sheet-form support may be used. The support is preferably a hydrophilic support. It is preferable that a material forming the support has a hydrophilic surface from the view point of the image quality of the printed material thus obtained.

Examples of materials forming the support include paper, paper laminated with a plastic (e.g. polyethylene, polypropylene, polystyrene, etc.), a metal sheet (e.g. aluminum, zinc, copper, etc.), a plastic film (e.g. cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinyl acetal, etc.), and paper or plastic film on which the above-mentioned metal is laminated or vapor-deposited. Preferred examples of the support include a polyester film and aluminum sheet. Among these, aluminum sheet is particularly preferable since the dimensional stability is good and it is relatively inexpensive.

The aluminum sheet is a pure aluminum sheet, an alloy sheet containing aluminum as a main component and a small amount of a different element, or a thin film of aluminum or an aluminum alloy laminated with a plastic. Examples of the different element contained in the aluminum alloy include silicon, iron, manganese, copper, magnesium, chromium, zinc, bismuth, nickel, and titanium. The content of the different element in the alloy is preferably equal to or less than 10 wt %. In the present invention, a pure aluminum sheet is preferable, but since it is difficult to produce completely pure aluminum because of the refining technique, a trace amount of a different element may be contained. The composition of the aluminum sheet is not specified, and a known generally used material may be utilized as appropriate.

The support preferably has a thickness of 0.1 to 0.6 mm, and more preferably 0.15 to 0.4 mm.

Prior to the aluminum sheet being used, it is preferably subjected to a surface treatment such as a surface roughening treatment or an anodizing treatment. Surface treatment makes it easy to improve the hydrophilicity and ensure that there is good adhesion between an image recording layer and the support. Prior to the aluminum sheet being subjected to the surface roughening treatment, it may be subjected as desired to a degreasing treatment using a surfactant, an organic solvent, an aqueous alkaline solution, etc. in order to remove rolling oil on the surface.

The surface roughening treatment for the aluminum sheet surface may be carried out by various types of methods, and examples thereof include a mechanical surface roughening treatment, an electrochemical surface roughening treatment (a surface roughening treatment involving dissolving the surface electrochemically), and a chemical surface roughening treatment (a surface roughening treatment involving selectively dissolving the surface chemically).

As a method for the mechanical surface roughening treatment, a known method such as a ball grinding method, a brush grinding method, a blast grinding method, or a buff grinding method may be used. It is also possible to use a transfer method in which an irregular shape is transferred using a roller provided with irregularities in an aluminum rolling stage.

As a method for the electrochemical surface roughening treatment, for example, a method in which alternating current or direct current is applied in an electrolyte solution containing an acid such as hydrochloric acid or nitric acid can be cited. It is also possible to employ a method as described in JP-A-54-63902 in which a mixed acid is used.

The aluminum sheet subjected to a surface roughening treatment is subjected as necessary to an alkali etching treatment using an aqueous solution of potassium hydroxide, sodium hydroxide, etc.; furthermore, after neutralization, it may be subjected to an anodizing treatment as desired in order to improve the abrasion resistance.

As an electrolyte that may be used for the anodizing treatment of the aluminum sheet, various types of electrolytes that form a porous oxide film may be used. In general, sulfuric acid, hydrochloric acid, oxalic acid, chromic acid, or a mixed acid thereof may be used. The concentration of the electrolyte may be determined as appropriate according to the type of electrolyte.

Conditions for the anodizing treatment depend on the type of electrolyte used and cannot be specified, but in general the electrolyte solution concentration is 1 to 80 wt %, the solution temperature is 5°C to 70°C, the current density is 5 to 60 A/dm², the voltage is 1 to 100V, and the electrolysis time is 10 sec. to 5 min. The amount of anodized film formed is preferably 1.0 to 5.0 g/m², and more preferably 1.5 to 4.0 g/m². It is preferable for it to be in this range since good plate life and good scratch resistance of a non-image area of a lithographic printing plate can be obtained.

As the support that can be used in the present invention, a substrate that has been subjected to the above-mentioned surface treatment and has an anodized film may be used as it is, but in order to further improve the adhesion to the hydrophobic image, and the hydrophilicity, the contamination resistance, etc., the substrate may appropriately be subjected as necessary to a treatment for enlarging micropores of the anodized film, a sealing treatment, or a surface hydrophilization treatment involving immersion in an aqueous solution containing a hydrophilic compound, which are described in JP-A-2001-253181 or JP-A-2001-322365. These enlarging and sealing treatments are not limited to those described therein, and any conventionally known methods may be employed.

### Sealing treatment

The sealing treatment may be vapor sealing, a treatment with an aqueous solution containing an inorganic fluorine compound such as a single treatment with fluorozirconic acid or a treatment with sodium fluoride, vapor sealing with added lithium chloride, or a sealing treatment with hot water.

Among these, the sealing treatment with an aqueous solution containing an inorganic fluorine compound, the sealing treatment with vapor, and the sealing treatment with hot water are preferable. Each thereof is explained below.

### Sealing treatment with aqueous solution containing inorganic fluorine compound

In the sealing treatment with an aqueous solution containing an inorganic fluorine compound, a metal fluoride can suitably be used as the inorganic fluorine compound.

Specific examples thereof include sodium fluoride, potassium fluoride, calcium fluoride, magnesium fluoride, sodium fluorozirconate, potassium fluorozirconate, sodium fluorotitanate, potassium fluorotitanate, ammonium fluorozirconate, ammonium fluorotitanate, potassium fluorotitanate, fluorozirconic acid, fluorotitanic acid, hexafluorosilicic acid, nickel fluoride, iron fluoride, fluorophosphoric acid, and ammonium fluorophosphate. Among them, sodium fluorozirconate, sodium fluorotitanate, fluorozirconic acid, and fluorotitanic acid are preferable.

The concentration of the inorganic fluorine compound in the aqueous solution is preferably at least 0.01 wt % from the viewpoint of sealing of micropores on an anodized coating being carried out sufficiently, and more preferably at least 0.05 wt %, and it is preferably no greater than 1 wt % from the viewpoint of contamination resistance, and more preferably no greater than 0.5 wt %.

The aqueous solution containing an inorganic fluorine compound preferably further contains a phosphate compound. It is preferable for a phosphate compound to be contained since the hydrophilicity of the surface of the anodized coating improves and the machine developability and the contamination resistance can be improved.

Preferred examples of the phosphate compound include phosphates of a metal such as an alkali metal or an alkaline earth metal.

Specific examples thereof include zinc phosphate, aluminum phosphate, ammonium phosphate, ammonium phosphate dibasic, ammonium dihydrogen phosphate, monoammonium phosphate, monopotassium phosphate, potassium dihydrogen phosphate, potassium phosphate dibasic, calcium phosphate, ammonium sodium hydrogen phosphate, magnesium hydrogen phosphate, magnesium phosphate, ferrous phosphate, ferric phosphate, sodium dihydrogen phosphate, sodium phosphate, sodium phosphate dibasic, lead phosphate, calcium dihydrogen phosphate, lithium phosphate, phosphotungstic acid, ammonium phosphotungstate, sodium phosphotungstate, ammonium phosphomolybdate, sodium phosphomolybdate, sodium phosphite, sodium tripolyphosphate, and sodium pyrophosphate. Among these, sodium dihydrogen phosphate, sodium phosphate dibasic, potassium dihydrogen phosphate, and potassium phosphate dibasic are preferable.

The combination of the inorganic fluorine compound and the phosphate compound is not particularly limited, but the aqueous solution preferably comprises at least sodium fluorozirconate as the inorganic fluorine compound and at least sodium dihydrogen phosphate as the phosphate compound.

The concentration of the phosphate compound in the aqueous solution is preferably at least 0.01 wt % from the viewpoint of improving machine developability and contamination resistance, and more preferably at least 0.1 wt %, and it is preferably no greater than 20 wt % from the viewpoint of solubility, and more preferably no greater than 5 wt %.

The proportion of each compound in the aqueous solution is not particularly limited, but the ratio by weight of the inorganic fluorine compound and the phosphate compound is preferably 1/200 to 10/1, and more preferably 1/30 to 2/1.

Furthermore, the temperature of the aqueous solution is preferably at least 20°C, and more preferably at least 40°C, and it is preferably no higher than 100°C, and more preferably no higher than 80°C.

Moreover, the pH of the aqueous solution is preferably at least 1, and more preferably at least 2, and it is preferably no greater than 11, and more preferably no greater than 5.

A method for the sealing treatment with the aqueous solution containing an inorganic fluorine compound is not particularly limited and, for example, an immersion method and a spray method may be used. They may be employed once or a plurality of times, or in a combination of two or more types.

Among these, the immersion method is preferable. When the treatment is carried out by the immersion method, the treatment time is preferably at least 1 sec., and more preferably at least 3 sec., and it is preferably no greater than 100 sec., and more preferably no greater than 20 sec.

### Sealing treatment with steam

With regard to the sealing treatment with steam, for example, a method in which an anodized coating is contacted with steam at high pressure or normal pressure continuously or discontinuously can be cited.

The temperature of the steam is preferably at least 80°C, and more preferably at least 95°C, and it is preferably no greater than 105°C.

The pressure of the steam is preferably in the range of (atmospheric pressure - 50 mmAq) to (atmospheric pressure + 300 mmAq) (1.008 x 10⁵ to 1.043 x 10⁵ Pa).

Furthermore, the time for which the coating is contacted with steam is preferably at least 1 sec., and more preferably at least 3 sec., and it is preferably no greater than 100 sec., and more preferably no greater than 20 sec.

### Sealing treatment with hot water

With regard to the sealing treatment with hot water, for example, a method in which an aluminum plate having an anodized coating formed thereon is immersed in hot water can be cited.

The hot water may contain an inorganic salt (e.g. a phosphate) or an organic salt.

The temperature of the hot water is preferably at least 80°C, and more preferably at least 95°C, and it is preferably no greater than 100°C.

Furthermore, the time for which immersion in hot water is carried out is preferably at least 1 sec., and more preferably at least 3 sec., and it is preferably no greater than 100 sec., and more preferably no greater than 20 sec.

With regard to a hydrophilization treatment that is used in the present invention, there is an alkali metal silicate method, as disclosed in US Pat. Nos. 2,714,066, 3,181,461, 3,280,734, and 3,902,734. In this method, a support is immersed in an aqueous solution of sodium silicate, etc., or subjected to electrolysis. In addition, there is a method in which a support is treated with potassium fluorozirconate, as described in JP-B-36-22063, and a method in which a support is treated with polyvinylphosphonic acid, as described in UP Pat. Nos. 3,276,868, 4,153,461, and 4,689,272.

In the present invention, it is preferable for the support to have a center line average roughness of 0.10 to 1.2 µm. It is preferable for it to be in this range since good adhesion to a hydrophobic recording image, good plate life, and good contamination resistance can be obtained.

### (a²) Step of discharging the ink composition of the present invention onto hydrophilic support

First, the ink composition of the present invention is discharged onto a hydrophilic support. This step may employ a conventionally known inkjet recording device in the same manner as in the above-mentioned inkjet recording method. Preferred ink temperature and viscosity when the ink is discharged using the inkjet recording device are the same as above and the control method therefor is also the same as above.

### (b²) Step of curing ink composition by irradiating discharged ink composition with actinic radiation so as to form hydrophobic image by curing ink composition

The ink composition discharged onto the surface of a hydrophilic support is cured by irradiation with actinic radiation. Details of this curing mechanism are the same as those described for the inkjet recording method. Furthermore, the actinic radiation source used for curing the ink composition and irradiation conditions therefor are also the same as those described for the inkjet recording method.

Via the above-mentioned steps, a hydrophoblic image is formed on the surface of a hydrophilic support by curing the ink composition of the present invention, thus giving a lithographic printing plate.

In this way, by producing a lithographic printing plate by application of the inkjet recording method of the present invention, the diameter of dots of ink that has landed can be maintained at a constant size even for lithographic printing plate supports having different surface wettabilities and, as a result, a hydrophobic image can be formed with good precision.

Furthermore, as described above, the ink composition of the present invention can be cured by actinic radiation with high sensitivity, and a hydrophobic region (hydrophobic image) having excellent adhesion to a support and excellent film properties can be formed.

From the above, the lithographic printing plate of the present invention has high image quality and also has excellent plate life.

Needless to say, the ink composition of the present invention not only forms an image area of such a lithographic printing plate but is also useful as a normal ink composition.

### Examples

The present invention is explained in further detail by reference to Examples and Comparative Examples. However, the present invention should not be construed as being limited to these Examples.

'Parts' described below means 'parts by weight' unless otherwise specified.

Materials used in the present invention are as follows.
IRGALITE BLUE GLVO (cyan pigment, manufactured by Ciba Specialty Chemicals)
CINQUASIA MAGENTA RT-335 D (magenta pigment, manufactured by Ciba Specialty Chemicals)
NOVOPERM YELLOW H2G (yellow pigment, manufactured by Clariant)
SPECIAL BLACK 250 (black pigment, manufactured by Ciba Specialty Chemicals)
KRONOS 2300 (white pigment, manufactured by KRONOS)
N-Vinylcaprolactam (manufactured by Aldrich)
Actilane 421 (propoxylated neopentyl glycol diacrylate, manufactured by Akcros)
Actilane 422 (dipropylene glycol diacrylate, manufactured by Akcros)
Rapi-Cure DVE-3 (triethylene glycol divinyl ether, manufactured by ISP Europe)
Ebecryl 657 (acrylate oligomer, manufactured by Daicel-Cytec Company Ltd.)
FirstCure ST-1 (polymerization inhibitor, manufactured by ChemFirst)
Lucirin TPO (photopolymerization initiator, manufactured by BASF)
Benzophenone (photopolymerization initiator, manufactured by Wako Pure Chemical Industries, Ltd.)
Irgacure 184 (photopolymerization initiator (1-hydroxycyclohexyl phenyl ketone), manufactured by Ciba Specialty Chemicals)
BYK 307 (surfactant, manufactured by BYK Chemie)
Light-Acrylate IMA (isomyristyl acrylate, manufactured by Kyoeisha Chemical Co., Ltd.)
FirstCure ITX (sensitizer, manufactured by ChemFirst)
Solsperse 32000 (dispersant, manufactured by Avecia)

### Preparation of cyan mill base A

300 parts by weight of IRGALITE BLUE GLVO, 500 parts by weight of Actilane 421 (acrylate monomer manufactured by Akcros), and 200 parts by weight of Solsperse 32000 were mixed by stirring to give a pigment ink. Preparation of a pigment mill base was carried out by putting it into an M50 disperser motor mill (manufactured by Igar) and using zirconia beads having a diameter of 0.65 mm at a peripheral speed of 9 m/s for 4 hours.

### Preparation of magenta mill base B

300 parts by weight of CINQUASIA MAGENTA RT-335 D, 300 parts by weight of Actilane 421 (acrylate monomer manufactured by Akcros), and 400 parts by weight of Solsperse 32000 were mixed by stirring to give a pigment ink. Preparation of a pigment mill base was carried out by putting it into an M50 disperser motor mill (manufactured by Igar) and using zirconia beads having a diameter of 0.65 mm at a peripheral speed of 9 m/s for 10 hours.

### Preparation of yellow mill base C

300 parts by weight of NOVOPERM YELLOW H2G, 300 parts by weight of Actilane 421 (acrylate monomer manufactured by Akcros), and 400 parts by weight of Solsperse 32000 were mixed by stirring to give a pigment ink. Preparation of a pigment mill base was carried out by putting it into an M50 disperser motor mill (manufactured by Igar) and using zirconia beads having a diameter of 0.65 mm at a peripheral speed of 9 m/s for 10 hours.

### Preparation of black mill base D

300 parts by weight of SPECIAL BLACK 250, 300 parts by weight of Actilane 421 (acrylate monomer manufactured by Akcros), and 400 parts by weight of Solsperse 32000 were mixed by stirring to give a pigment ink. Preparation of a pigment mill base was carried out by putting it into an M50 disperser motor mill (manufactured by Igar) and using zirconia beads having a diameter of 0.65 mm at a peripheral speed of 9 m/s for 7 hours.

### Preparation of white mill base E

500 parts by weight of KRONOS2300, 400 parts by weight of Actilane 421 (acrylate monomer manufactured by Akcros), and 100 parts by weight of Solsperse 32000 were mixed by stirring to give a pigment ink. Preparation of a pigment mill base was carried out by putting it into an M50 disperser motor mill (manufactured by Igar) and using zirconia beads having a diameter of 0.65 mm at a peripheral speed of 9 m/s for 4 hours.

### Inkjet image recording method

Subsequently, recording was carried out on a recording medium using an experimental inkjet recording device having a piezo system inkjet nozzle. The ink supply system comprised a main tank, a supply pipe, an ink supply tank immediately before an inkjet head, a filter, and a piezo system inkjet head, and a section from the ink supply tank to the inkjet head was thermally insulated and heated. Temperature sensors were provided on the ink supply tank and in the vicinity of the nozzle of the inkjet head, and the temperature was controlled so that the nozzle section was always at 45°C ±2°C. The piezo system inkjet head was driven so as to discharge multisize dots of 8 to 30 pL at a resolution of 720 x 720 dpi. The exposure system, the main scanning speed, and the discharge frequency were adjusted so that, after landing, UV light was focused to give an exposure area illumination intensity of 1,630 mW/cm², and irradiation started 0.1 sec. after the ink landed on the recording medium. The cumulative amount of light applied to an image was adjusted so as to be 4,500 mJ/cm². The UV lamp employed a HAN250NL high-cure mercury lamp (manufactured by GS Yuasa Corporation). Here, dpi referred to in the present invention denotes the number of dots per 2.54 cm. The recording medium employed an E5000 ester film (film thickness 125 µm, manufactured by Toyobo Co., Ltd.).

### Method for measuring curing sensitivity

In accordance with the above-mentioned inkjet recording method, a solid printed image having an average film thickness of 12 µm was formed, and the stickiness of the image was evaluated by touch after the image was irradiated with ultraviolet rays.

The curing sensitivity was evaluated using the following criteria.
3: No stickiness on image.
2: Image was slightly sticky.
1: Not hardened such that uncured ink was transferred to the hand.

### Flexibility evaluation method: bending test

In the examples, as a method for evaluating the flexibility of a cured film, a bending test was carried out.

In accordance with the above-mentioned inkjet image recording method, as a recording medium, an E5000 ester film (film thickness 125 µm, manufactured by Toyobo Co., Ltd.) was used, and two solid printed images having an average image area film thickness of 12 µm and 24 µm were formed. The bending test involved bending once at 25°C the recording medium on which an image had been formed, and an evaluation was carried out of the presence or absence of cracks in the image area. In general, when the average film thickness was large, the distortion occurring in the image area when bending the image area became large, and cracks easily occurred. That is, testing whether or not cracks occurred in an image area having a larger film thickness gave a measure of the flexibility.

The evaluation criteria were as follows.
3: No cracks occurred for samples having an average film thickness of 12 µm and 24 µm.
2: No cracks occurred for a sample having an average film thickness of 12 µm but cracks occurred in the bent portion of an image area of a sample having an average film thickness of 24 µm.
1: Cracks occurred in the bent portion of an image area for samples having an average film thickness of 12 µm and 24 µm.

### Substrate adhesion evaluation method: crosshatch test (EN ISO2409)

As recording media, a polycarbonate plate (Lexan 9034 Clear, film thickness 2 mm, manufactured by Asahi Glass), an acrylic plate (Repsol cast acrylic clear, film thickness 2 mm, manufactured by Repsol), PET (ester film E5000, film thickness 125 µm, manufactured by Toyobo Co., Ltd.), a PVC plate (Sintra, film thickness 2 mm, manufactured by Alcan Composites), and a polystyrene plate (HUNTSMAN HIGH IMPACT POLYSTYRENE, film thickness 2 mm, manufactured by HUNTSMAN) were used, and in accordance with the above-mentioned inkjet recording method, a solid printed image having an average image area film thickness of 12 µm was formed on each substrate. Subsequently, each printed material was subjected to a crosshatch test (EN ISO2409).

### Viscosity measurement method

Measurement of viscosity in the examples was carried out using a Brookfield LVDV-I type B viscometer (manufactured by Brookfield) at 25°C with a rotor rotational speed of 20 rpm.

### Example 1

The components below were stirred using a high-speed water-cooled stirrer to give a cyan UV inkjet ink. The viscosity was 21 mPa·s.

### Cyan ink composition

| | |
|---|---|
| (B) (D) (E) Cyan mill base A | 6.0 parts |
| (A) N-Vinylcaprolactam | 25.0 parts |
| (B) Actilane 422 | 36.9 parts |
| (B) Rapi-Cure DVE-3 | 9.5 parts |
| (B) Ebecryl 657 | 9.0 parts |
| FirstCure ST-1 | 0.05 parts |
| (C) Lucirin TPO (photoinitiator manufactured by BASF) | 8.5 parts |
| (C) Benzophenone (photoinitiator) | 3.0 parts |
| (C) Irgacure 184 (photoinitiator manufactured by CSC) | 2.0 parts |
| (F) BYK 307 (surfactant manufactured by BYK Chemie) | 0.05 parts |

| | |
|---|---|
| ((A):(B) content ratio by weight 1:2.3) | |

### Evaluation of ink

Inkjet recording was carried out using the ink composition thus obtained. An image having a film thickness of 12 µm was formed. The results of evaluation of the curability, flexibility of cured film, and adhesion are given in Table 1.

### Example 2

The components below were stirred using a high-speed water-cooled stirrer to give a magenta UV inkjet ink. The viscosity was 22 mPa·s.

### Magenta ink composition

| | |
|---|---|
| (B) (D) (E) Magenta mill base B | 12.0 parts |
| (A) N-Vinylcaprolactam | 25.0 parts |
| (B) Actilane 422 | 30.9 parts |
| (B) Rapi-Cure DVE-3 | 8.5 parts |
| (B) Ebecryl 657 | 9.0 parts |
| FirstCure ST-1 | 0.05 parts |
| (C) Lucirin TPO (photoinitiator manufactured by BASF) | 8.5 parts |
| (C) Benzophenone (photoinitiator) | 3.0 parts |
| (C) Irgacure 184 (photoinitiator manufactured by CSC) | 3.0 parts |
| (F) BYK 307 (surfactant manufactured by BYK Chemie) | 0.05 parts |

| | |
|---|---|
| ((A):(B) content ratio by weight 1:2.1) | |

### Evaluation of ink

Inkjet recording was carried out using the ink composition thus obtained. An image having a film thickness of 12 µm was formed. The results of evaluation of the curability, flexibility of cured film, and adhesion are given in Table 1.

### Example 3

The components below were stirred using a high-speed water-cooled stirrer to give a yellow UV inkjet ink. The viscosity was 23 mPa·s.

### Yellow ink composition

| | |
|---|---|
| (B) (D) (E) Yellow mill base C | 12.0 parts |
| (A) N-Vinylcaprolactam | 25.0 parts |
| (B) Actilane 422 | 30.9 parts |
| (B) Rapi-Cure DVE-3 | 8.5 parts |
| (B) Ebecryl 657 | 9.0 parts |
| FirstCure ST-1 | 0.05 parts |
| (C) Lucirin TPO (photoinitiator manufactured by BASF) | 8.5 parts |
| (C) Benzophenone (photoinitiator) | 3.0 parts |
| (C) Irgacure 184 (photoinitiator manufactured by CSC) | 3.0 parts |
| (F) BYK 307 (surfactant manufactured by BYK Chemie) | 0.05 parts |

| | |
|---|---|
| ((A):(B) content ratio by weight 1:2.1) | |

### Evaluation of ink

Inkjet recording was carried out using the ink composition thus obtained. An image having a film thickness of 12 µm was formed. The results of evaluation of the curability, flexibility of cured film, and adhesion are given in Table 1.

### Example 4

The components below were stirred using a high-speed water-cooled stirrer to give a black UV inkjet ink. The viscosity was 20 mPa·s.

### Black ink composition

| | |
|---|---|
| (B) (D) (E) Black mill base D | 6.0 parts |
| (A) N-Vinylcaprolactam | 25.0 parts |
| (B) Actilane 422 | 36.9 parts |
| (B) Rapi-Cure DVE-3 | 9.5 parts |
| (B) Ebecryl 657 | 9.0 parts |
| FirstCure ST-1 | 0.05 parts |
| (C) Lucirin TPO (photoinitiator manufactured by BASF) | 8.5 parts |
| (C) Benzophenone (photoinitiator) | 3.0 parts |
| (C) Irgacure 184 (photoinitiator manufactured by CSC) | 2.0 parts |
| (F) BYK 307 (surfactant manufactured by BYK Chemie) | 0.05 parts |

| | |
|---|---|
| ((A):(B) content ratio by weight 1:2.3) | |

### Evaluation of ink

Inkjet recording was carried out using the ink composition thus obtained. An image having a film thickness of 12 µm was formed. The results of evaluation of the curability, flexibility of cured film, and adhesion are given in Table 1.

### Example 5

The components below were stirred using a high-speed water-cooled stirrer to give a white UV inkjet ink. The viscosity was 24 mPa·s.

### White ink composition

| | |
|---|---|
| (B) (D) (E) White mill base E | 31.0 parts |
| (A) N-Vinylcaprolactam | 24.0 parts |
| (B) Actilane 422 | 12.9 parts |
| (B) Rapi-Cure DVE-3 | 9.5 parts |
| (B) Ebecryl 657 | 9.0 parts |
| FirstCure ST-1 | 0.05 parts |
| (C) Lucirin TPO (photoinitiator manufactured by BASF) | 8.5 parts |
| (C) Benzophenone (photoinitiator) ^{∼} | 3.0 parts |
| (C) Irgacure 184 (photoinitiator manufactured by CSC) | 2.0 parts |
| (F) BYK 307 (surfactant manufactured by BYK Chemie) | 0.05 parts |

| | |
|---|---|
| ((A):(B) content ratio by weight 1:1.8) | |

### Evaluation of ink

Inkjet recording was carried out using the ink composition thus obtained. An image having a film thickness of 12 µm was formed. The results of evaluation of the curability, flexibility of cured film, and adhesion are given in Table 1.

### Example 6

The components below were stirred using a high-speed water-cooled stirrer to give a clear UV inkjet ink. The viscosity was 16 mPa·s.

### Clear ink composition

| | |
|---|---|
| (A) N-Vinylcaprolactam | 30.0 parts |
| (B) Actilane 422 | 37.9 parts |
| (B) Rapi-Cure DVE-3 | 9.5 parts |
| (B) Ebecryl 657 | 9.0 parts |
| FirstCure ST-1 | 0.05 parts |
| (C) Lucirin TPO (photoinitiator manufactured by BASF) | 8.5 parts |
| (C) Benzophenone (photoinitiator) | 3.0 parts |
| (C) Irgacure 184 (photoinitiator manufactured by CSC) | 2.0 parts |
| (F) BYK 307 (surfactant manufactured by BYK Chemie) | 0.05 parts |

| | |
|---|---|
| ((A):(B) content ratio by weight 1:1.9) | |

### Evaluation of ink

Inkjet recording was carried out using the ink composition thus obtained. An image having a film thickness of 12 µm was formed. The results of evaluation of the curability, flexibility of cured film, and adhesion are given in Table 1.

### Example 7

The components below were stirred using a high-speed water-cooled stirrer to give a cyan UV inkjet ink. The viscosity was 22 mPa·s.

### Cyan ink composition

| | |
|---|---|
| (B) (D) (E) Cyan mill base A | 6.0 parts |
| (A) N-Vinylcaprolactam | 35.0 parts |
| (B) Actilane 422 | 26.9 parts |
| (B) Rapi-Cure DVE-3 | 9.5 parts |
| (B) Ebecryl 657 | 9.0 parts |
| FirstCure ST-1 | 0.05 parts |
| (C) Lucirin TPO (photoinitiator manufactured by BASF) | 8.5 parts |
| (C) Benzophenone (photoinitiator) | 3.0 parts |
| (C) Irgacure 184 (photoinitiator manufactured by CSC) | 2.0 parts |
| (F) BYK 307 (surfactant manufactured by BYK Chemie) | 0.05 parts |

| | |
|---|---|
| ((A):(B) content ratio by weight 1:1.4) | |

### Evaluation of ink

Inkjet recording was carried out using the ink composition thus obtained. An image having a film thickness of 12 µm was formed. The results of evaluation of the curability, flexibility of cured film, and adhesion are given in Table 1.

### Example 8

The components below were stirred using a high-speed water-cooled stirrer to give a cyan UV inkjet ink. The viscosity was 21 mPa·s.

### Cyan ink composition

| | |
|---|---|
| (B) (D) (E) Cyan mill base A | 6.0 parts |
| (A) N-Vinylcaprolactam | 15.0 parts |
| (B) Actilane 422 | 46.9 parts |
| (B) Rapi-Cure DVE-3 | 9.5 parts |
| (B) Ebecryl 657 | 9.0 parts |
| FirstCure ST-1 | 0.05 parts |
| (C) Lucirin TPO (photoinitiator manufactured by BASF) | 8.5 parts |
| (C) Benzophenone (photoinitiator) | 3.0 parts |
| (C) Irgacure 184 (photoinitiator manufactured by CSC) | 2.0 parts |
| (F) BYK 307 (surfactant manufactured by BYK Chemie) | 0.05 parts |

| | |
|---|---|
| ((A):(B) content ratio by weight 1:4.6) | |

### Evaluation of ink

Inkjet recording was carried out using the ink composition thus obtained. An image having a film thickness of 12 µm was formed. The results of evaluation of the curability, flexibility of cured film, and adhesion are given in Table 1.

### Example 9

The components below were stirred using a high-speed water-cooled stirrer to give a cyan UV inkjet ink. The viscosity was 36 mPa·s.

### Cyan ink composition

| | |
|---|---|
| (B) (D) (E) Cyan mill base A | 6.0 parts |
| (A) N-Vinylcaprolactam | 21.0 parts |
| (B) Actilane 422 | 33.9 parts |
| (B) Rapi-Cure DVE-3 | 9.5 parts |
| (B) Ebecryl 657 | 16.0 parts |
| FirstCure ST-1 | 0.05 parts |
| (C) Lucirin TPO (photoinitiator manufactured by BASF) | 8.5 parts |
| (C) Benzophenone (photoinitiator) | 3.0 parts |
| (C) Irgacure 184 (photoinitiator manufactured by CSC) | 2.0 parts |
| (F) BYK 307 (surfactant manufactured by BYK Chemie) | 0.05 parts |

| | |
|---|---|
| ((A):(B) content ratio by weight 1:3.0) | |

### Evaluation of ink

Inkjet recording was carried out using the ink composition thus obtained. An image having a film thickness of 12 µm was formed. The results of evaluation of the curability, flexibility of cured film, and adhesion are given in Table 1.

### Example 10

The components below were stirred using a high-speed water-cooled stirrer to give a cyan UV inkjet ink. The viscosity was 20 mPa·s.

| | |
|---|---|
| (B) (D) (E) Cyan mill base A | 6.0 parts |
| (A) N-Vinylcaprolactam | 29.0 parts |
| (B) Actilane 422 | 36.9 parts |
| (B) Rapi-Cure DVE-3 | 9.5 parts |
| (B) Ebecryl 657 | 9.0 parts |
| FirstCure ST-1 | 0.05 parts |
| (C) Lucirin TPO (photoinitiator manufactured by BASF) | 4.0 parts |
| (C) Benzophenone (photoinitiator) | 2.5 parts |
| (C) Irgacure 184 (photoinitiator manufactured by CSC) | 3.0 parts |
| (F) BYK 307 (surfactant manufactured by BYK Chemie) | 0.05 parts |

| | |
|---|---|
| ((A):(B) content ratio by weight 1:2.0) | |

### Evaluation of ink

Inkjet recording was carried out using the ink composition thus obtained. An image having a film thickness of 12 µm was formed. The results of evaluation of the curability, flexibility of cured film, and adhesion are given in Table 1.

### Example 11

The components below were stirred using a high-speed water-cooled stirrer to give a cyan UV inkjet ink. The viscosity was 20 mPa·s.

| | |
|---|---|
| (B) (D) (E) Cyan mill base A | 6.0 parts |
| (A) N-Vinylcaprolactam | 29.0 parts |
| (B) Actilane 422 | 38.4 parts |
| (B) Rapi-Cure DVE-3 | 9.5 parts |
| (B) Ebecryl 657 | 9.0 parts |
| FirstCure ST-1 | 0.05 parts |
| (C) Lucirin TPO (photoinitiator manufactured by BASF) | 6.0 parts |
| (C) Benzophenone (photoinitiator) | 1.0 parts |
| (C) Irgacure 184 (photoinitiator manufactured by CSC) | 1.0 parts |
| (F) BYK 307 (surfactant manufactured by BYK Chemie) | 0.05 parts |

| | |
|---|---|
| ((A):(B) content ratio by weight 1:2.1) | |

### Evaluation of ink

Inkjet recording was carried out using the ink composition thus obtained. The results of evaluation of the curability, flexibility of cured film, and adhesion are given in Table 1.

### Example 12

The components below were stirred using a high-speed water-cooled stirrer to give a cyan UV inkjet ink. The viscosity was 20 mPa·s.

| | |
|---|---|
| (B) (D) (E) Cyan mill base A | 6.0 parts |
| (A) N-Vinylcaprolactam | 29.0 parts |
| (B) Actilane 422 | 38.4 parts |
| (B) Rapi-Cure DVE-3 | 9.5 parts |
| (B) Ebecryl 657 | 9.0 parts |
| FirstCure ST-1 | 0.05 parts |
| (C) Lucirin TPO (photoinitiator manufactured by BASF) | 4.0 parts |
| (C) Benzophenone (photoinitiator) | 2.0 parts |
| (C) Irgacure 184 (photoinitiator manufactured by CSC) | 2.0 parts |
| (F) BYK 307 (surfactant manufactured by BYK Chemie) | 0.05 parts |

| | |
|---|---|
| ((A):(B) content ratio by weight 1:2.0) | |

### Evaluation of ink

Inkjet recording was carried out using the ink composition thus obtained. The results of evaluation of the curability, flexibility of cured film, and adhesion are given in Table 1.

### Comparative Example 1

The components below were stirred using a high-speed water-cooled stirrer to give a cyan UV inkjet ink. The viscosity was 22 mPa·s.

### Cyan ink composition

| | |
|---|---|
| (B) (D) (E) Cyan mill base A | 6.0 parts |
| (A) N-Vinylcaprolactam | 51.0 parts |
| (B) Actilane 421 | 12.4 parts |
| (B) Rapi-Cure DVE-3 | 5.0 parts |
| (B) Ebecryl 657 | 9.0 parts |
| FirstCure ST-1 | 0.05 parts |
| (C) Lucirin TPO (photoinitiator manufactured by BASF) | 8.5 parts |
| (C) Benzophenone (photoinitiator) | 4.0 parts |
| (C) Irgacure 184 (photoinitiator manufactured by CSC) | 4.0 parts |
| (F) BYK 307 (surfactant manufactured by BYK Chemie) | 0.05 parts |

| | |
|---|---|
| ((A):(B) content ratio by weight 1:0.6) | |

### Evaluation of ink

(A) N-Vinylcaprolactam did not dissolve and an evaluation of the ink could not be made.

### Comparative Example 2

The components below were stirred using a high-speed water-cooled stirrer to give a cyan UV inkjet ink. The viscosity was 21 mPa·s.

### Cyan ink composition

| | |
|---|---|
| (B) (D) (E) Cyan mill base A | 6.0 parts |
| (A) N-Vinylcaprolactam | 7.0 parts |
| (B) Actilane 422 | 54.9 parts |
| (B) Rapi-Cure DVE-3 | 9.5 parts |
| (B) Ebecryl 657 | 9.0 parts |
| FirstCure ST-1 | 0.05 parts |
| (C) Lucirin TPO (photoinitiator manufactured by BASF) | 8.5 parts |
| (C) Benzophenone (photoinitiator) | 3.0 parts |
| (C) Irgacure 184 (photoinitiator manufactured by CSC) | 2.0 parts |
| (F) BYK 307 (surfactant manufactured by BYK Chemie) | 0.05 parts |

| | |
|---|---|
| ((A):(B) content ratio by weight 1:10.9) | |

### Evaluation of ink

Inkjet recording was carried out using the ink composition thus obtained. An image having a film thickness of 12 µm was formed. The results of evaluation of the curability, flexibility of cured film, and adhesion are given in Table 1.

### Comparative Example 3

The components below were stirred using a high-speed water-cooled stirrer to give a cyan UV inkjet ink. The viscosity was 21 mPa·s.

### Cyan ink composition

| | |
|---|---|
| (B) (D) (E) Cyan mill base A | 6.0 parts |
| (A) N-Vinylcaprolactam | 5.0 parts |
| (B) Actilane 422 | 56.9 parts |
| (B) Rapi-Cure DVE-3 | 9.5 parts |
| (B) Ebecryl 657 | 9.0 parts |
| FirstCure ST-1 | 0.05 parts |
| (C) Lucirin TPO (photoinitiator manufactured by BASF) | 8.5 parts |
| (C) Benzophenone (photoinitiator) | 3.0 parts |
| (C) Irgacure 184 (photoinitiator manufactured by CSC) | 2.0 parts |
| (F) BYK 307 (surfactant manufactured by BYK Chemie) | 0.05 parts |

| | |
|---|---|
| ((A):(B) content ratio by weight 1:15.7) | |

### Evaluation of ink

Inkjet recording was carried out using the ink composition thus obtained. An image having a film thickness of 12 µm was formed. The results of evaluation of the curability, flexibility of cured film, and adhesion are given in Table 1.

### Comparative Example 4

The components below were stirred using a high-speed water-cooled stirrer to give a cyan UV inkjet ink. The viscosity was 17 mPa·s.

### Cyan ink composition

| | |
|---|---|
| (B) (D) (E) Cyan mill base A | 6.0 parts |
| (B) Actilane 422 | 36.9 parts |
| (B) Light-Acrylate IMA | 25.0 parts |
| (B) Rapi-Cure DVE-3 | 9.5 parts |
| (B) Ebecryl 657 | 9.0 parts |
| FirstCure ST-1 | 0.05 parts |
| (C) Lucirin TPO (photoinitiator manufactured by BASF) | 8.5 parts |
| (C) Benzophenone (photoinitiator) | 3.0 parts |
| (C) Irgacure 184 (photoinitiator manufactured by CSC) | 2.0 parts |
| (F) BYK 307 (surfactant manufactured by BYK Chemie) | 0.05 parts |

### Evaluation of ink

Inkjet recording was carried out using the ink composition thus obtained. An image having a film thickness of 12 µm was formed, but when the surface of the image was touched by hand, it was sticky.

### Example 13

The components below were stirred using a high-speed water-cooled stirrer to give a cyan UV inkjet ink. The viscosity was 21 mPa·s.

### Cyan ink composition

| | |
|---|---|
| (B) (D) (E) Cyan mill base A | 6.0 parts |
| (A) N-Vinylcaprolactam | 24.0 parts |
| (B) Actilane 422 | 36.9 parts |
| (B) Rapi-Cure DVE-3 | 9.5 parts |
| (B) Ebecryl 657 | 9.0 parts |
| FirstCure ST-1 | 0.05 parts |
| FirstCure ITX | 1.0 parts |
| (C) Lucirin TPO (photoinitiator manufactured by BASF) | 8.5 parts |
| (C) Benzophenone (photoinitiator) | 3.0 parts |
| (C) Irgacure 184 (photoinitiator manufactured by CSC) | 2.0 parts |
| (F) BYK 307 (surfactant manufactured by BYK Chemie) | 0.05 parts |

| | |
|---|---|
| ((A):(B) content ratio by weight 1:2.4) | |

### Evaluation of ink

Inkjet recording was carried out in the same manner as in the above-mentioned inkjet recording except that, after landing, UV light was focused to give an exposure area illumination intensity of 400 mW/cm² and a cumulative light intensity on an image of 3,000 mJ/cm², and the lamp employed an NCCU033 UV-LED lamp (manufactured by Nichia corporation). There were no dots missing in the image thus obtained, and a vivid image having a film thickness of 12 µm was formed. The results of evaluation of the curability, flexibility of cured film, and adhesion are given in Table 1.

### Example 14

The components below were stirred using a high-speed water-cooled stirrer to give a cyan UV inkjet ink. The viscosity was 21 mPa·s.

### Cyan ink composition

| | |
|---|---|
| (B) (D) (E) Cyan mill base A | 6.0 parts |
| (A) N-Vinylcaprolactam | 22.0 parts |
| (B) Actilane 422 | 36.9 parts |
| (B) Rapi-Cure DVE-3 | 9.5 parts |
| (B) Ebecryl 657 | 9.0 parts |
| FirstCure ST-1 | 0.05 parts |
| FirstCure ITX | 3.0 parts |
| (C) Lucirin TPO (photoinitiator manufactured by BASF) | 8.5 parts |
| (C) Benzophenone (photoinitiator) | 3.0 parts |
| (C) Irgacure 184 (photoinitiator manufactured by CSC) | 2.0 parts |
| (F) BYK 307 (surfactant manufactured by BYK Chemie) | 0.05 parts |

| | |
|---|---|
| ((A):(B) content ratio by weight 1:2.7) | |

### Evaluation of ink

Inkjet recording was carried out in the same manner as in the above-mentioned inkjet recording except that, after landing, UV light was focused to give an exposure area illumination intensity of 450 mW/cm² and a cumulative light intensity on an image of 12,000 mJ/cm², and the lamp employed an SHP270W super high pressure mercury lamp (manufactured by PHOENIX Electric Co., Ltd.), which is generally used for a projector, etc. There were no dots missing in the image thus obtained, and a vivid image having a film thickness of 12 µm was formed. The results of evaluation of the curability, flexibility of cured film, and adhesion are given in Table 1.

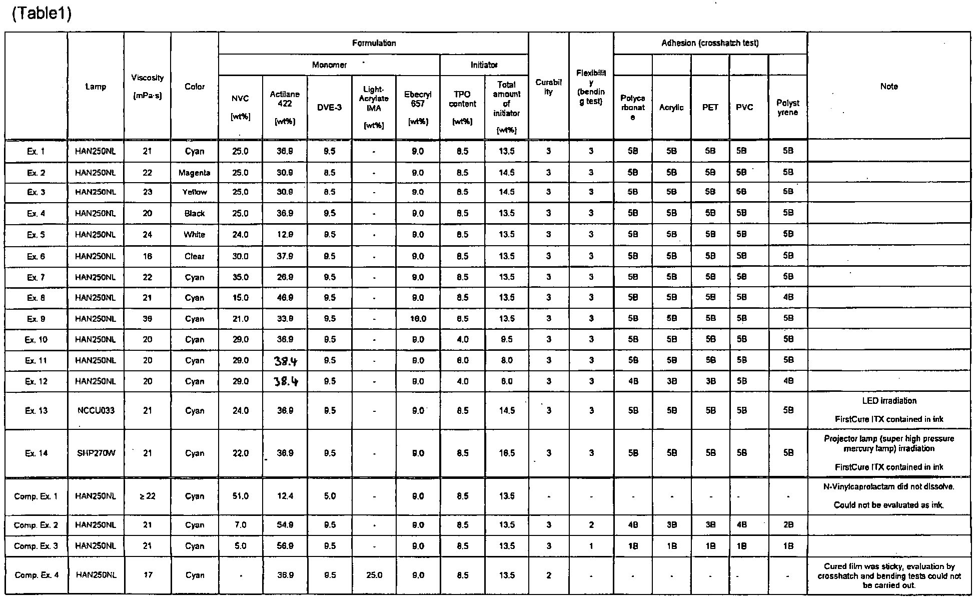

As is clear from Table 1, it has been ascertained that the ink compositions of Examples 1 to 12, which contained 10 wt % or greater of the N-vinyllactam N-vinylcaprolactam and in which the (A) N-vinyllactam : (B) radically polymerizable compound content ratio by weight was 1:8.5 to 1:1, had good curability, flexibility, and adhesion to various substrates. Furthermore, it has been ascertained that the ink composition of Example 13, which contained 10 wt % or greater of the N-vinyllactam N-vinylcaprolactam and in which the (A) N-vinyllactam : (B) radically polymerizable compound content ratio by weight was 1:8.5 to 1:1, formed a cured film by the use of an LED light source and had good curability, flexibility, and adhesion to various substrates. Moreover, it has been ascertained that the ink composition of Example 14, which contained 10 wt % or greater of the N-vinyllactam N-vinylcaprolactam and in which the (A) N-vinyllactam : (B) radically polymerizable compound content ratio by weight was 1:8.5 to 1:1, formed a cured film by the use of a super high pressure mercury lamp and had good curability, flexibility, and adhesion to various substrates. On the other hand, the ink composition of Comparative Example 1, in which the content ratio by weight of (A):(B) was 1:0.6, could not be evaluated as an ink since the N-vinylcaprolactam did not dissolve. Furthermore, the ink composition of Comparative Example 2, in which the content ratio by weight of (A):(B) was 1:10.9, had insufficient flexibility and adhesion. Moreover, the ink composition of Comparative Example 3, in which the content of the N-vinyllactam was 10 wt % or less, had greatly degraded flexibility and adhesion. Furthermore, the ink composition of Comparative Example 4, in which the N-vinyllactam N-vinylcaprolactam was replaced with Light-Acrylate IMA, which is similarly a monofunctional monomer, had insufficient curability.

### Example 15

### Preparation of support

A melt was prepared using an aluminum alloy containing Si (0.06 wt %), Fe (0,30 wt %), Cu (0.025 wt %), Mn (0.001 wt %), Mg (0.001 wt %), Zn (0.001 wt %), and Ti (0.03 wt %), the remainder being Al and its inevitable impurities, and it was subjected to a melt treatment and filtration, and then formed into an ingot having a thickness of 500 mm and a width of 1,200 mm by a DC casting method. After the surface thereof was shaved off by an average thickness of 10 mm by means of a scalping machine, it was thermally maintained at 550°C for about 5 hours, and when the temperature dropped to 400°C, it was made into a rolled sheet having a thickness of 2.7 mm by means of a hot rolling mill. It was further thermally treated at 500°C by means of a continuous annealing machine, and then finished so as to have a thickness of 0.24 mm by means of cold rolling, thus giving an aluminum sheet of JIS 1050 material. The aluminum thus obtained had an average crystal minor axis of 50 µm and an average crystal major axis of 300 µm. After making the width of this aluminum 1,030 mm, it was subjected to the surface treatment below to give an aluminum support.

### Surface treatment

The surface treatment involved consecutively carrying out the various treatments (i) to (x) below. After each treatment and washing with water, liquid was removed by a nip roll.

### (i) Mechanical roughening treatment

The surface of the aluminum sheet was subjected to a mechanical roughening treatment by means of a rotating roll-shaped nylon brush while supplying a suspension of an abrasive (pumice) having a specific gravity of 1.12 in water as an abrasive slurry to the surface of the aluminum sheet. The abrasive had an average particle size of 30 µm and a maximum particle size of 100 µm. The material of the nylon brush was nylon-6,10, the bristle length was 45 mm, and the diameter of the bristles was 0.3 mm. The nylon brush was formed by making holes in a stainless steel tube having a diameter of 300 mm and densely implanting the bristles. Three rotating brushes were used. The distance of two support rolls (φ 200 mm) below the brush was 300 mm. The brush rolls were pressed against the aluminum sheet so that the load on a drive motor for rotating the brushes increased by 7 kW from the load before pressing the brush rolls. The direction of rotation of the brushes was the same as the direction in which the aluminum sheet moved. The rotational speed of the brushes was 200 rpm.

### (ii) Alkali etching treatment

The aluminum sheet obtained above was subjected to an etching treatment by means of a spray using an aqueous solution having a sodium hydroxide concentration of 2.6 wt %, an aluminum ion concentration of 6.5 wt %, and a temperature of 70°C so as to dissolve 10 g/m² of the aluminum sheet. Subsequently, it was washed with water by means of a spray.

### (iii) Desmutting treatment

A desmutting treatment was carried out by means of a spray using an aqueous solution having a nitric acid concentration of 1 wt % and a temperature of 30°C (containing 0.5 wt % of aluminum ion), and following this washing with water was carried out by means of a spray. The aqueous solution of nitric acid used in the desmutting treatment employed liquid waste from a step involving carrying out an electrochemical roughening treatment using alternating current in an aqueous solution of nitric acid.

### (iv) Electrochemical roughening treatment

An electrochemical roughening treatment was carried out consecutively using an ac voltage of 60 Hz. An electrolytic solution in this process was a 10.5 g/L aqueous solution of nitric acid (containing 5 g/L of aluminum ion and 0.007 wt % of ammonium ion), and the solution temperature was 50°C. The electrochemical roughening treatment was carried out using as an ac power source waveform a trapezoidal rectangular wave alternating current having a duty ratio of 1:1 and a time from zero to peak current value of 0.8 msec, with a carbon electrode as a counter electrode. Ferrite was used as an auxiliary anode.

The current density was 30 A/dm² as a peak current value, and the quantity of electricity was 220 C/dm² as the total quantity of electricity when the aluminum sheet was the anode. 5% of the current flowing from the power source was diverted to the auxiliary anode. Following this, washing with water was carried out by means of a spray.

### (v) Alkali etching treatment

The aluminum sheet was subjected to an etching treatment at 32°C by means of a spray using an aqueous solution having a sodium hydroxide concentration of 26 wt % and an aluminum ion concentration of 6.5 wt % so as to dissolve 0.50 g/m² of the aluminum sheet, remove a smut component containing aluminum hydroxide as a main component formed in the previous paragraph when carrying out the electrochemical roughening treatment using alternating current, and dissolve an edge portion of a pit formed to thus make the edge portion smooth. Subsequently, washing with water was carried out by means of a spray.

### (vi) Desmutting treatment

A desmutting treatment was carried out by means of a spray using an aqueous solution having a nitric acid concentration of 15 wt % and a temperature of 30°C (containing 4.5 wt % of aluminum ion), and following this washing with water was carried out by means of a spray. The aqueous solution of nitric acid used in the desmutting treatment employed liquid waste from the step involving carrying out the electrochemical roughening treatment using alternating current in an aqueous solution of nitric acid.

### (vii) Electrochemical roughening treatment

An electrochemical roughening treatment was carried out consecutively using an ac voltage of 60 Hz. The electrolytic solution in this process was a 5.0 g/L aqueous solution of hydrochloric acid (containing 5 g/L of aluminum ion), and the temperature was 35°C. The electrochemical roughening treatment was carried out using as an ac power source waveform a trapezoidal rectangular wave alternating current having a duty ratio of 1:1 and a time from zero to peak current value of 0.8 msec, with a carbon electrode as a counter electrode. Ferrite was used as an auxiliary anode.

The current density was 25 A/dm² as a peak current value, and the quantity of electricity was 50 C/dm² as the total quantity of electricity when the aluminum sheet was the anode. Following this, washing with water was carried out by means of a spray.

### (viii) Alkali etching treatment

The aluminum sheet was subjected to an etching treatment at 32°C by means of a spray using an aqueous solution having a sodium hydroxide concentration of 26 wt % and an aluminum ion concentration of 6.5 wt % so as to dissolve 0.12 g/m² of the aluminum sheet, remove a smut component containing aluminum hydroxide as a main component formed in the previous paragraph when carrying out the electrochemical roughening treatment using alternating current, and dissolve an edge portion of a pit formed to thus make the edge portion smooth. Subsequently, washing with water was carried out by means of a spray.

### (ix) Desmutting treatment

A desmutting treatment was carried out by means of a spray using an aqueous solution having a sulfuric acid concentration of 25 wt % and a temperature of 60°C (containing 0.5 wt % of aluminum ion), and following this washing with water was carried out by means of a spray.

### (x) Anodizing treatment

An anodizing treatment was carried out using an anodizing system (first and second electrolysis section lengths 6 m each, and first and second power supply section lengths 3 m each). Sulfuric acid was used as an electrolytic solution supplied to the first and second electrolysis sections. Each of the electrolytic solutions had a sulfuric acid concentration of 50 g/L (containing 0.5 wt % of aluminum ion) and a temperature of 20°C. Following this, washing with water was carried out by means of a spray. The final amount of oxidized film was 2.7 g/m².

### Hydrophilized layer by means of silicate

The support thus treated was immersed in an aqueous solution of No. 3 sodium silicate at 70°C for 13 sec., then washed with water and dried. The surface roughness Ra obtained as an average value of 5 measurements using a Surfcom model 575A surface roughness meter manufactured by Tokyo Seimitsu Co., Ltd. with a cutoff value of 0.8 mm for a measurement length of 3 mm was 0.55 µm.

### Ink-receiving layer

An ink-receiving layer coating solution having the composition below was applied using a wire-wound bar and dried at 80°C for 15 sec. to thus form a coated film, thereby giving a support with an ink-receiving layer. The amount of ink-receiving layer applied was 20 mg/m².

**(Table 2)**

| Type | Name | Amount |
|---|---|---|
| Water-soluble polymer | Poly(sodium p-styrenesulfonate) | 0.25 g |
| Surfactant | Compound [F-1] | 0.20 g |
| Coloring material | Acid Violet 34 dye | 0.05 g |
| Coating activator | TSA-731 (silicone-based surfactant) (manufactured by Toshiba Silicone Co., Ltd.) | 0.0005 g |
| | Ion-exchanged water | 60 g |
| | Methanol | 40 g |

### Compound [F-1]

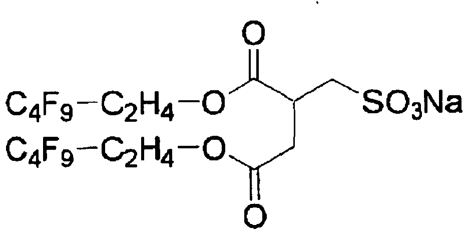

### Inkjet recording

Inkjet recording was carried out, on a support on which the above-mentioned ink-receiving layer had been formed, using the same ink composition as that of Example 1 as follows.

When forming an image, as a head a shear mode piezo head (CA3: minimum droplet size 6 pL, number of nozzles 318, nozzle density 150 nozzles/25.4 mm, manufactured by Toshiba Tec Corporation) was used, and a head scanning type image formation system equipped with this head on a mobile carriage was employed. The ink was charged into an ink tank with a capacity of 2 L that had a pressure reduction function and the ink, which was degassed by removing gas that had dissolved in the ink by reducing the pressure to -40kPa, was introduced into the above-mentioned head by a Teflon (registered trademark) flexible tube having an inner diameter of 2 mm via a hydrostatic pressure control tank (capacity 50 mL). By controlling the height of the hydrostatic pressure tank relative to the head, the internal pressure of the head was adjusted to -6.6 kPa, and the meniscus shape in the nozzle portion of the head was controlled. Furthermore, water was circulated in the head by a circulating water-type temperature control system (SCINICS CH-201) so that the ink temperature within the head became 45°C. The drive voltage for the head was 24 V, and discharge was carried out in 8-value multi drop mode or binary mode. The frequencies for dot formation were 4.8kHz and 12kHz respectively. The imaging pitch was 600 dpi in the head scan direction (head scan speed 203 mm/s) × 600 dpi in the recording medium transport direction for the 8-value multi drop mode, and 1,200 dpi in the head scan direction (head scan speed 254 mm/s) × the recording medium transport direction for the binary mode (speed 416 mm/s), that is, bidirectional interlace printing was carried out by the head while stepping the recording medium. Furthermore, as cleaning means for the above-mentioned head, wiping means comprising a nonwoven cloth that carried out wiping without contacting the nozzle plate of the head was provided, and cleaning was carried out as appropriate.

### Exposure

1 sec. to 60 sec. after the inkjet, exposure to light was carried out using a 3kW high pressure mercury lamp to thus form a lithographic printing plate.

### Image evaluation

The diameter of image dots thus obtained was measured using an optical microscope, and was found to be 35 µm.

### Printing test

Printing was carried out using the lithographic printing plate thus obtained, without subjecting it to a gum treatment, with a Lithron printer manufactured by Komori Corporation, using IF102 damping solution (manufactured by Fuji Photo Film Co., Ltd.), and DIC-GEOS (N) Sumi ink manufactured by Dainippon Ink and Chemicals, Incorporated. 10,000 sheets or greater of high quality printed material free from white spots in an image area and stains in a non-image area were obtained, and it has been ascertained that the plate life is at a level that causes no problems in practical use.

## Claims

1. An ink composition comprising:
(A) at least one N-vinyllactam;
(B) at least one radically-polymerizable compound other than an N-vinyllactam;
(C) a polymerization initiator comprising:
(i-1) at least one acylphosphine compound,
(i-2) a 1-hydroxycyclohexyl phenyl ketone compound, and
(ii) a benzophenone compound or a thioxanthone compound; and
(F) a surfactant;
wherein:
the total amount of the at least one N-vinyllactam (A) is 12-40 wt.% based on the weight of the ink composition,
the content ratio by weight of (A) to (B) is 1:7 to 1:1, and
the ink composition has a viscosity of 5-40 mPa·s at 25°C.

2. An ink composition according to Claim 1, wherein the polymerization initiator (C) comprises a thioxanthone compound.

3. An ink composition according to Claim 1 or Claim 2, further comprising a colorant (D) selected from a magenta pigment, a yellow pigment, a black pigment, a white pigment, a magenta dye and a yellow dye.

4. An ink composition according to any preceding claim, wherein the total amount of the polymerization initiator (C) is at least 9 wt.%.

5. An ink composition according to any preceding claim, wherein the total amount of the at least one acylphosphine compound is at least 6 wt.%

6. An ink composition according to any preceding claim, wherein the total amount of the at least one N-vinyllactam (A) and the at least one radically-polymerizable compound (B) is at least 65 wt.%.

7. An ink composition according to any preceding claim, further comprising a colorant (D) and a dispersant (E).

8. An ink composition according to any preceding claim, wherein the N-vinyllactam (A) is N-vinylcaprolactam.

9. An ink composition according to any preceding claim, wherein the total amount of the at least one N-vinyllactam (A) is 15-40 wt.%.

10. Use of an ink composition according to any preceding claim for inkjet recording.

11. An inkjet recording method comprising:
(a¹) a step of discharging an ink composition as defined in any of Claims 1-9 onto a recording medium; and
(b¹) a step of curing the discharged ink composition by irradiating it with actinic radiation.

12. An inkjet recording method according to Claim 11, wherein the actinic radiation is UV radiation which has a peak light emission wavelength of 350-420 nm and is emitted by a light-emitting diode that produces a maximum illumination intensity on the surface of the recording medium of 10-2,000 mW/cm².

13. A printed material obtainable by an inkjet recording method as defined in Claim 11 or Claim 12.

## Patentansprüche

1. Tintenzusammensetzung, umfassend:
(A) mindestens ein N-Vinyllactam;
(B) mindestens eine radikalisch polymerisierbare Verbindung, die sich von einem N-Vinyllactam unterscheidet;
(C) einen Polymerisationsinitiator, umfassend:
(i-1) mindestens eine Acylphosphinverbindung,
(i-2) eine 1-Hydroxycyclohexylphenylketonverbindung, und
(ii) eine Benzophenonverbindung oder eine Thioxanthonverbindung; und
(F) ein Tensid;
worin:
die Gesamtmenge von dem zumindest einem N-Vinyllactam (A) 12 bis 40 Gew.-% beträgt, bezogen auf das Gesamtgewicht der Tintenzusammensetzung,
das Gewichtsverhältnis von (A) zu (B) 1:7 bis 1:1 beträgt, und
die Tintenzusammensetzung eine Viskosität von 5 bis 40 mPa·s bei 25°C aufweist.

2. Tintenzusammensetzung gemäß Anspruch 1, worin der Polymerisationsinitiator (C) eine Thioxanthonverbindung umfasst.

3. Tintenzusammensetzung gemäß Anspruch 1 oder Anspruch 2, ferner umfassend ein Färbemittel (D), ausgewählt aus einem Magenta-farbenen Pigment, einem gelben Pigment, einem schwarzen Pigment, einem weißen Pigment, einem Magenta-farbenen Farbstoff und einem gelben Farbstoff.

4. Tintenzusammensetzung gemäß irgendeinem vorstehenden Anspruch, worin die Gesamtmenge des Polymerisationsinitiators (C) mindestens 9 Gew.-% beträgt.

5. Tintenzusammensetzung gemäß irgendeinem vorstehenden Anspruch, worin die Gesamtmenge der zumindest einen Acylphosphinverbindung mindestens 6 Gew.-% beträgt.

6. Tintenzusammensetzung gemäß irgendeinem vorstehenden Anspruch, worin die Gesamtmenge von dem zumindest einen N-Vinyllactam (A) und der zumindest einen radikalisch polymerisierbaren Verbindung (B) mindestens 65 Gew.-% beträgt.

7. Tintenzusammensetzung gemäß irgendeinem vorstehenden Anspruch, ferner umfassend ein Färbemittel (D) und ein Dispergiermittel (E).

8. Tintenzusammensetzung gemäß irgendeinem vorstehenden Anspruch, worin das N-Vinyllactam (A) N-Vinylcaprolactam ist.

9. Tintenzusammensetzung gemäß irgendeinem vorstehenden Anspruch, worin die Gesamtmenge des zumindest einen N-Vinyllactams (A) 15 bis 40 Gew.-% beträgt.

10. Verwendung einer Tintenzusammensetzung gemäß irgendeinem vorstehenden Anspruch für die Tintenstrahlaufzeichnung.

11. Tintenstrahl-Aufzeichnungsverfahren, umfassend:
(a¹) einen Schritt zum Ausstoßen einer Tintenzusammensetzung, wie sie in irgendeinem der Ansprüche 1 bis 9 definiert ist, auf ein Aufzeichnungsmedium; und
(b¹) einen Schritt zum Härten der ausgestoßenen Tintenzusammensetzung durch Bestrahlen hiervon mit aktinischer Strahlung.

12. Tintenstrahl-Aufzeichnungsverfahren gemäß Anspruch 11, worin die aktinische Strahlung UV-Strahlung ist, die eine Peak-Lichtemissionswellenlänge bei 350 bis 420 nm aufweist und von einer LED emittiert wird, die auf der Oberfläche des Aufzeichnungsmediums eine maximale Beleuchtungsintensität von 10 bis 2.000 mW/cm² erreicht.

13. Bedrucktes Material/Drucksache, erhältlich durch das Tintenstrahl-Aufzeichnungsverfahren, wie es in Anspruch 11 oder Anspruch 12 definiert ist.

## Revendications

1. Composition d'encre comprenant :
(A) au moins un N-vinyllactame ;
(B) au moins un composé polymérisable par voie radicalaire autre que le N-vinyllactame ;
(C) un initiateur de polymérisation comprenant :
(i-1) au moins un composé d'acylphosphine,
(i-2) un composé de 1-hydroxycyclohexyl phényl cétone, et
(ii) un composé de benzophénone ou un composé de thioxanthone ; et
(F) un tensioactif ;
dans laquelle :
la quantité totale de l'au moins un N-vinyllactame (A) est de 12 à 40 % en poids sur la base du poids de la composition d'encre,
le rapport des teneurs en poids entre (A) et (B) est de 1:7 à 1:1, et
la composition d'encre présente une viscosité de 5 à 40 mPa·s à 25 °C.

2. Composition d'encre selon la revendication 1, dans laquelle l'initiateur de polymérisation (C) comprend un composé de thioxanthone.

3. Composition d'encre selon la revendication 1 ou la revendication 2, comprenant en outre un colorant (D) sélectionné parmi un pigment magenta, un pigment jaune, un pigment noir, un pigment blanc, un colorant magenta et un colorant jaune.

4. Composition d'encre selon l'une quelconque des revendications précédentes, dans laquelle la quantité totale de l'initiateur de polymérisation (C) est au moins de 9 % en poids.

5. Composition d'encre selon l'une quelconque des revendications précédentes, dans laquelle la quantité totale de l'au moins un composé d'acylphosphine est au moins de 6 % en poids.

6. Composition d'encre selon l'une quelconque des revendications précédentes, dans laquelle la quantité totale de l'au moins un N-vinyllactame (A) et de l'au moins un composé polymérisable par voie radicalaire (B) est au moins de 65 % en poids.

7. Composition d'encre selon l'une quelconque des revendications précédentes, comprenant en outre un colorant (D) et un dispersant (E).

8. Composition d'encre selon l'une quelconque des revendications précédentes, dans laquelle le N-vinyllactame (A) est le N-vinylcaprolactame.

9. Composition d'encre selon l'une quelconque des revendications précédentes, dans laquelle la quantité totale de l'au moins un N-vinyllactame (A) est de 15 à 40 % en poids.

10. Utilisation d'une composition d'encre selon l'une quelconque des revendications précédentes pour un enregistrement par jet d'encre.

11. Procédé d'enregistrement par jet d'encre comprenant :
(a¹) une étape de déchargement d'une composition d'encre telle que définie dans l'une quelconque des revendications 1 à 9 sur un support d'enregistrement ; et
(b¹) une étape de durcissement de la composition d'encre déchargée en l'irradiant avec un rayonnement actinique.

12. Procédé d'enregistrement par jet d'encre selon la revendication 11, dans lequel le rayonnement actinique est un rayonnement UV qui présente une longueur d'onde d'émission de lumière maximale de 350 à 420 nm et est émis par une diode électroluminescente qui produit une intensité d'éclairage maximale sur la surface du support d'enregistrement de 10 à 2000 mW/cm².

13. Matériau imprimé pouvant être obtenu par un procédé d'enregistrement par jet d'encre tel que défini dans la revendication 11 ou la revendication 12.
